# EUROPÄISCHE PATENTSCHRIFT

(11) **EP 3 124 149 B1**
(45) Veröffentlichungstag und Bekanntmachung des Hinweises auf die Patenterteilung: **09.02.2022**
(21) Anmeldenummer: 16181452.0
(22) Anmeldetag: 27.07.2016
(51) Int. Cl.: B23C 5/10, B23B 31/11

(54) **ROTIERBARES ZERSPAN-WERKZEUG MIT AXIALSICHERUNG FÜR SCHLÜSSEL SOWIE SCHLÜSSEL**
ROTATABLE MACHINING TOOL HAVING AN AXIAL SECURING ELEMENT FOR KEY AND KEY
OUTIL D'ENLEVEMENT ROTATIF COMPRENANT UNE SECURITE AXIALE POUR CLE ET CLE

(30) Priorität: 29.07.2015 DE 102015214432
(43) Veröffentlichungstag der Anmeldung: 01.02.2017
(73) Patentinhaber: Franz Haimer Maschinenbau KG, 86568 Hollenbach-Igenhausen (DE)
(72) Erfinder: Haimer, Franz, 86568 Igenhausen (DE)
(74) Vertreter: Schwarz, Wolfgang

(56) Entgegenhaltungen:
- CH-A2- 700 315
- DE-A1-102012 100 976
- DE-A1-102013 100 939
- DE-U1- 20 304 352
- FR-A1- 2 814 101
- GB-A- 191 501 082
- US-A1- 2006 072 977
- US-A1- 2009 056 250

## Beschreibung

Die vorliegende Anmeldung betrifft einen Bauteilesatz aus einem rotierbares Zerspan-Werkzeug und einem Maulschlüssel oder einem Einsatzbauteil gemäß Anspruch 1. Die vorliegende Anmeldung betrifft weiter ein rotierbares Zerspan-Werkzeug, insbesondere Werkzeugkopf, wie etwa Fräs-, Schleif- oder Bohrkopf, gemäß dem Oberbegriff des Anspruchs 5.

Die vorliegende Erfindung betrifft weiter eine Maulschlüssel-Formation für einen Maulschlüssel zur Einleitung von Drehmoment in ein rotierbares Objekt, insbesondere in die Schlüsselangriffsflächen-Formationen eines rotierbaren Zerspan-Werkzeuges, gemäß dem Oberbegriff des Anspruchs 9.

Eingangs beschriebene rotierbare Zerspan-Werkzeuge sind allgemein bekannt. Sie werden in Fachkreisen auch als "Werkzeugköpfe" oder als "Einschraubköpfe" bezeichnet. Gattungsgemäße Zerspan-Werkzeuge sind beispielsweise aus der DE 10 2012 100 976 A1, der DE 10 2013 100 939 A1 und der US 2006/0072977 A1 bekannt. Ein weiteres rotierbares Zerspan-Werkzeug ist beispielsweise aus der WO 2014/026975 A1 der Anmelderin bekannt.

Eine gattungsgemäße Maulschlüssel-Formation ist aus der GB 01082 A A.D. 1915 bekannt. Die hinter den gattungsgemäßen Zerspan-Werkzeugen stehende Idee ist, dass bei der bestimmungsgemäßen Verwendung eines Zerspan-Werkzeugs im Wesentlichen nur die Zerspan-Formation, also etwa die Schneiden, verschlissen wird, während die übrigen Bauteilabschnitte des Zerspan-Werkzeugs unabhängig vom Verschleiß der Zerspan-Formation betriebsbereit bleiben. Daher wurden Zerspan-Werkzeuge geschaffen, bei welchen die verschlissene Zerspan-Formation gegen eine unverschlissene ausgetauscht kann, wobei das wenigstens eine verbleibende, das Zerspan-Werkzeug tragende Bauteil, weiter verwendet werden kann. Ein solches das Zerspan-Werkzeug tragende Bauteil kann ein Schaftbauteil sein, in das das Zerspan-Werkzeug mit seiner Schraubverbindungs-Formation eingedreht werden kann. Das Schaftbauteil kann beispielsweise mit einem vom Zerspan-Werkzeug verschiedenen Schaftdurchmesser passend für Werkzeugaufnahmen gestaltet sein. Das das Zerspan-Werkzeug tragende Bauteil kann auch eine Werkzeugaufnahme oder ein Spannfutter selbst sein, in das das Zerspan-Werkzeug der vorliegenden Erfindung ohne Zwischenanordnung eines Schaftbauteils unmittelbar eingedreht sein kann. Die gattungsgemäßen Zerspan-Werkzeuge kommen an rotierenden Werkzeugmaschinen, etwa an Bohr- oder Fräsmaschinen, zum Einsatz.

Diese Zerspan-Werkzeuge werden üblicherweise mit eigens für diese Aufgabe gestalteten Maulschlüsseln in das das Zerspan-Werkzeug tragende Bauteil eingedreht. Diese Maulschlüssel weisen hierzu eine Maulschlüssel-Formation auf, in welche die Schlüsselangriffsflächen-Formationen des Zerspan-Werkzeugs längs einer Einführachse einführbar sind. Maulschlüssel sind nachfolgend nur kurz als "Schlüssel" bezeichnet.

Im Stand der Technik sind häufig sowohl die Schlüsselangriffsflächen-Formationen am rotierbaren Zerspan-Werkzeug wie auch die Schlüsselflächenbereiche an der Maulschlüssel-Formation durch genau zwei parallele ebene Kontaktflächen gebildet, welche im Falle der Schlüsselangriffsflächen-Formationen parallel zur Werkzeugachse orientiert sind. Entsprechendes gilt selbstverständlich auch für die Schlüsselflächenbereiche der Maulschlüssel-Formation, für die die Werkzeugachse als Bezugsachse jedoch nur dann zur Verfügung steht, wenn sich die Maulschlüssel-Formation im Anlageeingriff mit dem Zerspan-Werkzeug befindet.

Die Folge ist, dass ein an die Schlüsselangriffsflächen-Formation zur Drehmomenteinleitung angesetzter Schlüssel innerhalb der ebenen Schlüsselangriffsfläche und dort vor allem in axialer Richtung verrutschen kann. Ein Verrutschen orthogonal zur Werkzeugachse ist dabei in der Regel unbedenklich, da der Schlüssel mit seiner der Maulöffnung gegenüber liegenden Maulbasis bis zur Herstellung einer Anlage am Werkzeug auf das Zerspan-Werkzeug aufgeschoben werden kann. Die Verrutschbarkeit in axialer Richtung kann dagegen problematisch sein, etwa dann, wenn in axialer Richtung zu dem Längsendbereich mit der Zerspan-Formation hin die Schlüsselangriffsflächen-Formation axial unmittelbar an eine Schneide des Zerspan-Werkzeugs angrenzt. In diesem Fall kann ein axiales Verrutschen des Schlüssels zu einer unerwünschten Beschädigung der Schneide, also ganz allgemein der Zerspan-Formation, führen.

Es ist daher Aufgabe der vorliegenden Erfindung, eine technische Lehre anzugeben, mit welcher eine Beschädigung der Zerspan-Formation durch ein Verrutschen eines zur Drehmomenteinleitung in Anlageeingriff mit den Schlüsselangriffsflächen-Formationen verbrachten Schlüssels mit möglichst großer Kontaktfläche für den Anlageeingriff verhindert werden kann.

Diese Aufgabe löst die vorliegende Erfindung gemäß einem ersten Aspekt durch einen Bauteilesatz aus einem rotierbaren Zerspan-Werkzeug und einem Maulschlüssel oder einem Einsatzbauteil mit allen Merkmalen des Anspruchs 1. Diese Aufgabe löst die vorliegende Erfindung gemäß einem zweiten Aspekt durch ein rotierbares Zerspan-Werkzeug mit allen Merkmalen des Anspruchs 5 und gemäß einem dritten Aspekt durch eine Maulschlüssel-Formation mit allen Merkmalen des Anspruchs 9.

Die im Zusammenhang mit dem Zerspan-Werkzeug genannte Werkzeugachse ist dabei die Rotationsachse, um welche das Zerspan-Werkzeug betriebs- und bestimmungsgemäß im Zerspanbetrieb rotiert. Die Werkzeugachse/Rotationsachse des Zerspan-Werkzeugs definiert dabei eine axiale Richtung. Sofern in der vorliegenden Anmeldung keine abweichende Definition angegeben ist, ist mit "radial" eine Richtung orthogonal zur Werkzeugachse auf diese zu bzw. von dieser weg bezeichnet und ist mit "Umfangsrichtung" eine um die Werkzeugachse umlaufende Richtung bezeichnet. Die Werkzeugachse bildet somit den Ursprung eines Zylinderkoordinatensystems. Die bezeichnete Anlagefläche der Schlüsselangriffsflächen-Formation kann aufgrund ihrer nicht-parallelen Orientierung relativ zur Werkzeugachse als körperliche Barriere gegen eine axiale Bewegung eines Schlüssels dienen.

Hierzu ist bei dem erfindungsgemäßen Bauteilesatz ein mit der Schlüsselangriffsflächen-Formation des Zerspan-Werkzeugs zur Einleitung eines Drehmoments in Anlageeingriff bringbarer Maulschlüssel für einen Formschlusseingriff nach dem Schlüssel-Schloss-Prinzip mit zur Schlüsselangriffsflächen-Formation wenigstens abschnittsweise komplementären Schlüsselflächen ausgebildet.

Ein weiterer Vorteil der hier vorgeschlagenen Schlüsselangriffsflächen-Formation ist, dass sie, verglichen mit einer einzigen ebenen werkzeugachsenparallelen Schlüsselangriffsfläche einer Schlüsselangriffsflächen-Formation des Standes der Technik, aufgrund der Anlagefläche, welche mit der Werkzeugachse einen von 0° bzw. 180° verschiedenen Winkel einschließt, bei gleicher Axialerstreckung eine insgesamt größere Kontaktfläche für einen Anlageeingriff mit einer Schlüsselfläche eines Schlüssels bereitstellen kann. Daher ist zu erwarten, dass über die erfindungsgemäße Schlüsselangriffsflächen-Formation bei gleicher axialer Erstreckung wie die aus dem Stand der Technik bekannten Schlüsselangriffsflächen aufgrund der vergrößerten Kontaktfläche auch ein größeres Drehmoment übertragbar ist.

Die Mehrzahl von zur Werkzeugachse nicht-parallelen Anlageflächen des Zerspan-werkzeugs des Bauteilesatzes verläuft vorteilhafterweise in einer Richtung orthogonal zur Werkzeugachse, um in dieser Richtung die Aufschiebbarkeit des Schlüssels auf die Schlüsselangriffsflächen-Formation sicherzustellen. Bezüglich der Werkzeugachse kann die Mehrzahl von Anlageflächen beliebig geneigt sein, wobei Neigewinkel von mehr als 25° zur Axialsicherung des Schlüssels am Zerspan-Werkzeug vorteilhaft sind.

Im Rahmen der vorliegenden Anmeldung wird eine Fläche als zu einem Bereich hinweisend verstanden, wenn ihr Normalenvektor eine zu dem Bereich hinweisende Komponente aufweist. Im Zylinderkoordinatensystem des Zerspan-Werkzeugs kommt es dabei für die Frage, ob die Anlagefläche zur Zerspan-Formation oder zur Schraubverbindungs-Formation hinweist, auf die axiale Komponente des Normalenvektors an. Eine sicherere und vor allen Dingen in beide axialen Richtungen wirksame Axialsicherung, also sowohl zur Zerspan-Formation wie auch zur Schraubverbindungs-Formation hin, wird gemäß dem ersten, den Bauteilesatz betreffenden Aspekt der vorliegenden Erfindung dadurch erzielt, dass die wenigstens eine Axialsicherungsformation eine Mehrzahl von zur Werkzeugachse nicht-parallelen Anlageflächen umfasst, welche in axialer Richtung aufeinander folgend angeordnet sind.

Die Anlageflächen sind dabei gemäß dem ersten Aspekt der vorliegenden Erfindung um eine zur Werkzeugachse orthogonale Anstellachse relativ zueinander angestellt, vorzugsweise paarweise aufeinander zu oder/und voneinander weg weisend. Die Mehrzahl von Anlageflächen stellt gemäß dem ersten Aspekt der vorliegenden Erfindung so beispielsweise orthogonal zur Werkzeugachse verlaufende Nuten oder/und Vorsprünge bereit, in welche entsprechend komplementär ausgebildete Schlüsselflächenbereiche von Maulschlüsseln orthogonal zur Werkzeugachse eingeschoben und herausgezogen werden können, wobei diese jedoch in axialer Richtung durch die Axialsicherungsformation formschlüssig sicher in ihrer Axialposition gehalten sind.

Die wenigstens eine Anlagefläche des Zerspan-Werkszeugs gemäß dem zweiten Aspekt der vorliegenden

Erfindung ist gekrümmt ausgebildet, was die in einem vorbestimmten Axialbereich der Schlüsselangriffsflächen-Formation erzielbare Kontaktfläche mit einer Schlüsselfläche des Maulschlüssels weiter erhöhen kann. Dadurch, dass die wenigstens eine Anlagefläche um eine zur Werkzeugachse orthogonale Krümmungsachse gekrümmt ist, ist das Aufschieben und das Abziehen des Maulschlüssels auf die bzw. von der Schlüsselangriffsflächen-Formation in einer Richtung orthogonal zur Werkzeugachse möglich. Um ein radiales Vorstehen von Schlüsselangriffsflächenbereichen am Zerspan-Werkzeug zu vermeiden, ist die Anlagefläche bei Betrachtung von außen bevorzugt konkav gekrümmt.

Bei gekrümmten Anlageflächen ist der Neigungswinkel der Anlagefläche relativ zur Werkzeugachse lokal anhand einer die Anlagefläche berührenden Tangentialebene zu bestimmen. Es ist dann der von der Tangentialebene mit der Werkzeugachse eingeschlossene Winkel als der Neigungswinkel zu bestimmen.

Aus Gründen einer möglichst einfachen, aber dennoch hochgenauen Fertigung kann die Mehrzahl von Anlageflächen des Zerspan-Werkzeugs des erfindungsgemäßen Bauteilesatzes eben ausgebildet sein.

Es kann hierbei auch eine Mischung aus gekrümmten und ebenen Anlageflächen oder sogar Anlageflächenbereichen ein und derselben Anlagefläche vorgesehen sein. Im Falle einer gekrümmten Anlagefläche kann die Anlagefläche negativ- oder positivteilzylindrisch sein, d. h. der Krümmungsradius der gekrümmten Anlagefläche ist ortsunabhängig und somit konstant. Der Krümmungsradius muss jedoch nicht konstant sein, sondern kann ortsabhängig unterschiedliche Werte aufweisen. Zur Sicherstellung der Aufschiebbarkeit eines Maulschlüssels auf die Schlüsselangriffsflächen-Formation ist der Krümmungsradius wenigstens längs der zur Werkzeugachse orthogonalen Krümmungsachse konstant. Beispielsweise kann der Krümmungsradius einer gekrümmten Anlagefläche einen von der Winkelstellung des Krümmungsradius relativ zur wenigstens einen Krümmungsachse unterschiedlichen Wert aufweisen. So kann er beispielsweise in Scheitelbereichen, in welchen eine an die gekrümmte Anlagefläche angelegte Tangentialebene parallel zur Werkzeugachse ist, einen größeren oder bevorzugt kleineren Wert aufweisen als in Randbereichen der Anlagefläche, in welchen diese an weitere Anlageflächen angrenzt oder an weitere Bereiche der Schlüsselangriffsflächen-Formation angrenzt, die keinen Beitrag zur Axialsicherungsformation leisten, etwa an zur Werkzeugachse parallele Flächenbereiche der Schlüsselangriffsflächen-Formation. Eine gekrümmte Anlagefläche kann mehr als nur eine zugeordnete Krümmungsachse aufweisen, wobei dann unterschiedliche Krümmungsachsen die Flächenkrümmung in unterschiedlichen Flächenbereichen bestimmen. Zur Sicherung der Aufschiebbarkeit eines Schlüssels sind die mehreren Krümmungsachsen bevorzugt zueinander parallel.

Es sollte grundsätzlich berücksichtigt werden, dass die Schlüsselangriffsflächen-Formation abgesehen von der wenigstens einen zur Axialsicherungsformation beitragenden Anlagefläche weitere Flächenbereiche aufweisen kann und in der Regel auch aufweist, die keinen Beitrag zur Axialsicherungsformation leisten. Diese sind in der Regel orthogonal zur Werkzeugachse ausgerichtet.

Grundsätzlich kann es ausreichen, nur eine der Schlüsselangriffsflächen-Formationen mit einer Axialsicherungsformation auszurüsten. Dies gilt vor allem dann, wenn zwischen einer Maulschlüssel-Formation eines passenden Maulschlüssels und den Schlüsselangriffsflächen-Formationen des Zerspan-Werkzeugs sehr enge Toleranzen bestehen, die ein Verkippen des Schlüssels um eine zur Werkzeugachse orthogonale Achse - eigentlich um eine Aufschubachse, längs welcher Schlüsselflächenbereiche einer Maulschlüssel-Formation auf die Schlüsselangriffsflächen-Formation aufgeschoben werden - nicht erwarten lassen. Bevorzugt ist zur Vermeidung jeglichen Kippverhaltens jedoch vorgesehen, dass jede Schlüsselangriffsflächen-Formation eine Axialsicherungsformation aufweist, vorzugsweise das die einander gegenüberliegenden Schlüsselangriffsflächen-Formationen bezüglich einer die Werkzeugachse enthaltenden Symmetrieebene spiegelsymmetrisch oder/und bezüglich der Werkzeugachse rotationssymmetrisch sind.

Die "Aufschubachse" ist dabei jene theoretische Bewegungsbahn, längs welcher eine Maulschlüssel-Formation eines Maulschlüssels zur Vorbereitung einer Drehmomenteinleitung auf die Schlüsselangriffsflächen-Formationen des Zerspan-Werkzeugs aufgeschoben wird. Sie verläuft in der Regel orthogonal zur Werkzeugachse des Zerspan-Werkzeugs auf das die Maulschlüssel-Formation aufgeschoben wird. Sie liegt in der Erstreckungsebene der in der Regel ebenen Maulschlüssel-Formation. Die Aufschubachse und die oben genannte Einführachse entsprechen einander und sind lediglich auf einen unterschiedlichen Koordinatenursprung bezogen, die Aufschubachse auf das Zerspan-Werkzeug und die Einführachse auf die Maulschlüssel-Formation. Wie eingangs dargelegt wurde, werden die mit der oben diskutierten Axialsicherungsformation verbundenen gewünschten Wirkungen - Sicherung gegen axiales Verrutschen und Erhöhung der Kontaktfläche zwischen Schlüssel und Werkzeug - bei dem erfindungsgemäßen Bauteilesatz mit einer Maulschlüssel-Formation eines Maulschlüssels oder eines Einsatzbauteils erzielt, die wenigstens abschnittsweise komplementär zur oben beschriebenen wenigstens einen Axialsicherungsformation des rotierbaren Zerspan-Werkzeugs ausgebildet ist. Dabei ist es nicht notwendig, dass sich Schlüsselflächen-Formationen der Maulschlüssel-Formation und Schlüsselangriffsflächen-Formationen des Zerspan-Werkzeugs längs ihrer gesamten Flächen kontaktieren. Gerade dann, wenn die wenigstens eine Axialsicherungsformation, wie gemäß dem ersten Aspekt der vorliegenden Erfindung, orthogonal zur Werkzeugachse verlaufende Nuten oder Vorsprünge aufweist, kann es zur Erleichterung des Aufschiebens und Abziehens eines Schlüssels auf die Schlüsselangriffsflächen-Formationen bzw. von diesen vorteilhaft sein und ist es gemäß dem ersten Aspekt der Erfindung vorgesehen, dass sich eine Anlagefläche und eine zur Kontaktierung dieser Anlagefläche ausgebildete Barrierefläche der Maulschlüssel-Formation nur in Flankenbereichen von entsprechenden Nuten bzw. Vorsprüngen berühren, während die Nutscheitel bzw. Vorsprungsscheitel bei hergestelltem Anlageeingriff zwischen der Maulschlüssel-Formation und den Schlüsselangriffsflächen-Formationen mit Abstand voneinander angeordnet sind.

Um eine schnelle Herstellung eines zur Drehmomentübertragung bereiten Anlageeingriffs von werkzeugseitigen Schlüsselangriffsflächen-Formationen und von schlüsselseitigen Schlüsselflächenbereichen aneinander ohne langwierige und Geduld erfordernde Einfädelvorgänge zu ermöglichen, kann gemäß einer vorteilhaften Weiterbildung der vorliegenden Erfindung vorgesehen sein, dass jede der Schlüsselangriffsflächen-Formationen wenigstens zwei in Umfangsrichtung um die Werkzeugachse mit Abstand voneinander vorgesehene Schlüsselangriffsflächenbereiche aufweist, welche derart voneinander weg geneigt sind, dass sie einen von der Werkzeugachse weg vorstehenden Scheitel bilden.

Der Scheitel kann ein spitzer Scheitel sein, wenn etwa die relativ zueinander geneigten Schlüsselangriffsflächenbereiche unmittelbar aneinander angrenzen. Der Scheitel kann jedoch auch abgeplattet sein, etwa wenn zwischen den relativ zueinander geneigten Schlüsselangriffsflächenbereichen ein Zwischenflächenbereich vorgesehen ist. Der abgeplattete Scheitel ist in Umfangsrichtung um die Werkzeugachse länger als der spitze Scheitel, steht aber in radialer Richtung weniger weit von der Werkzeugachse vor, was das Aufschieben eines Maulschlüssels auf die Schlüsselangriffsflächen-Formation erleichtern kann.

Mit den Schlüsselangriffsflächenbereichen einer Schlüsselangriffsflächen-Formation können auch Bereiche der wenigstens einen Anlagefläche der Axialsicherungsformation, vorzugsweise der Mehrzahl von Anlageflächen der Axialsicherungsformation, unter Bildung eines von der Werkzeugachse weg vorstehenden Scheitels relativ zueinander geneigt sein. Entsprechendes gilt für durch eine Mehrzahl von Anlageflächen gebildete Nuten oder/und Vorsprünge. Auch diese können relativ zu einander die genannten Scheitel bildenden Bereiche aufweisen.

Durch die in der genannten Art und Weise geneigte Ausbildung von Schlüsselangriffsflächenbereichen in den beiden Schlüsselangriffsflächen-Formationen sind die Schlüsselangriffsflächen-Formationen bei Betrachtung von radial außen in Umfangsrichtung um die Werkzeugachse konvex, so dass der Abstand von zwei über die Aufschubachse hinweg gegenüberliegenden Schlüsselangriffsflächenbereichen an ihrem scheitelfernen Ende geringer sein kann als an ihrem scheitelnäheren Ende. Somit können diese Schlüsselangriffsflächenbereiche eine Aufschubhilfe für einen Schlüssel bilden und das im Stand der Technik beim Aufschieben eines eng tolerierten Schlüssels auf Schlüsselangriffsflächen-Formationen häufig erforderliche "Einfädeln" vermindern oder sogar vermeiden.

Darüber hinaus kann mit der wenigstens einen Schlüsselangriffsflächen-Formation mit voneinander weg angewinkelten Schlüsselangriffsflächenbereichen auch gewährleistet werden, dass ein Anlageeingriff zwischen einer Schlüsselfläche eines Maulschlüssels und einem Schlüsselangriffsflächenbereich des Zerspan-Werkzeugs als flächige Anlage erfolgt und Drehmoment nicht etwa nur über eine Kante der wenigstens einen Schlüsselangriffsflächen-Formation eingeleitet wird. Bei den Schlüsselangriffsflächen-Formationen des Standes der Technik ist eine Drehmomenteinleitung über die Kanten der Schlüsselangriffsflächen-Formationen - gemeint sind hier deren die Schlüsselangriffsflächen-Formationen in Umfangsrichtung abschließende Ränder - eher der Regelfall. Denn die Maulschlüssel-Formation des Maulschlüssels muss in ihrer Maulweite mit einem gewissen Mindestübermaß gegenüber dem Abstand der Schlüsselangriffsflächen bereitgestellt werden, um ein Aufschieben der Maulschlüssel-Formation auf die Schlüsselangriffsflächen-Formationen überhaupt zu ermöglichen. Wird die Maulschlüssel-Formation nach dem Aufschieben der Schlüsselangriffsflächen-Formationen des Standes der Technik um die Werkzeugachse gedreht, kommt es in der Regel zu einem Anliegen der Backen der Maulschlüssel-Formation ausschließlich an den Kanten der Schlüsselangriffsflächen-Formationen.

Anders liegt der Fall bei dem vorliegend weitergebildeten Zerspan-Werkzeug, bei welchem die beschriebene Neigung von orthogonal über die Aufschubachse hinweg einander gegenüberliegenden Schlüsselangriffsflächenbereichen relativ zu einander eine Art Einführ- bzw. Aufschubschräge bildet, die das Aufschieben eines Maulschlüssels erleichtert. Dadurch kann die Maulweite einer für ein Ein- oder Ausdrehen eines vorgegebenen Zerspan-Werkzeugs erforderlichen Maulschlüssel-Formation mit geringeren Toleranzen bereitgestellt werden als dies im Stand der Technik der Fall ist, was zu einem vorteilhaften flächigen Anliegen von Schlüsselflächen an Schlüsselangriffsflächenbereichen führt. Dies wiederum führt zu einer erheblich verminderten Hertz'schen Pressung an den an der Drehmomenteinleitung beteiligten Bauteilabschnitten, so dass bei ansonsten gleicher Bauteilgestaltung wie im Stand der Technik in ein erfindungsgemäßes Zerspan-Werkzeug ein erhöhtes Drehmoment eingeleitet werden kann.

Um zu vermeiden, dass bei der Einleitung von Drehmoment in die Schlüsselangriffsflächenbereiche eine unerwünschte Axialkraft auf das Zerspan-Werkzeug ausgeübt wird, ist es vorteilhaft, wenn eine Neigungsachse, um welche zwei in Umfangsrichtung um die Werkzeugachse benachbarte Schlüsselangriffsflächenbereiche einer Schlüsselangriffsflächen-Formation relativ zueinander geneigt sind, parallel zur Werkzeugachse ist. Diese Neigungsachse ist nicht zu verwechseln mit der Neigeachse, um welche die Anlagefläche relativ zur Werkzeugachse geneigt ist.

Um zur Bildung der Schlüsselangriffsflächen-Formationen am Zerspan-Werkzeug möglichst wenig Material von diesem abtragen zu müssen und damit die Struktur des Zerspan-Werkzeugs möglichst wenig zu schwächen, ist es bevorzugt, wenn die unmittelbar in Umfangsrichtung benachbarten Schlüsselangriffsflächenbereiche einer Schlüsselangriffsflächen-Formation nur geringfügig relativ zueinander geneigt sind, beispielsweise wenn ihre Normalenvektoren einen Winkel von nicht mehr als 15°, bevorzugt von nicht mehr als 10°, stärker bevorzugt nicht mehr als 7,5° und höchst bevorzugt sogar nicht mehr als 5° einschließen. Bevorzugt sind alle Neigungswinkel an Schlüsselangriffsflächen-Formationen eines Zerspan-Werkzeugs gleich groß.

Um zu erreichen, dass es beim Aufschieben des Maulschlüssels auf die Schlüsselangriffsflächen-Formationen des Zerspan-Werkzeugs auf die Orientierung des Zerspan-Werkzeugs in Umfangsrichtung möglichst nicht ankommt, ist gemäß einer bevorzugten Weiterbildung der vorliegenden Erfindung vorgesehen, dass das Zerspan-Werkzeug zwei Schlüsselangriffsflächen-Formationen aufweist, welche bezüglich einer die Werkzeugachse enthaltenden Symmetrieebene spiegelsymmetrisch sind oder/und welche bezüglich der Werkzeugachse als Symmetrieachse rotationssymmetrisch sind. In dem bezeichneten Fall der Spiegelsymmetrie liegt die oben genannte Aufschubachse in der Spiegelsymmetrieebene. Aufschubachse und die zu ihr in der Regel orthogonale Werkzeugachse spannen dann die Spiegelsymmetrieebene auf.

Sowohl die genannte Spiegelsymmetrie wie auch die genannte Rotationssymmetrie gestatten überdies, dass die Schlüsselangriffsflächenbereiche einer Schlüsselangriffsflächen-Formation in Umfangsrichtung unterschiedlich lang ausgebildet sein können, falls dies gewünscht ist. So können im Falle der Spiegelsymmetrie die Scheitel der Schlüsselangriffsflächen-Formationen orthogonal zur Aufschubachse einander gegenüber liegen, im Falle der Rotationssymmetrie können die Scheitel auf einer die Werkzeugachse schneidenden Durchmesserlinie liegen, welche einen von 90° verschiedenen Winkel mit der Aufschubachse einschließen kann.

Zur möglichst gleichmäßigen Einleitung eines Drehmoments in das Zerspan-Werkzeug über wenigstens zwei Schlüsselangriffsflächenbereiche ist vorteilhafterweise vorgesehen, dass wenigstens ein Schlüsselangriffsflächenbereich einer Schlüsselangriffsflächen-Formation parallel zu einem Schlüsselangriffsflächenbereich einer anderen Schlüsselangriffsflächen-Formation ist. Wenn es bei der Drehmomenteinleitung auf die Orientierung des Zerspan-Werkzeugs in Umfangsrichtung nicht ankommen soll, ist es vorteilhaft, wenn jeder Schlüsselangriffsflächenbereich einer Schlüsselangriffsflächen-Formation parallel zu einem Schlüsselangriffsflächenbereich der anderen Schlüsselangriffsflächen-Formation ist. Dabei ist genauer vorteilhaft vorgesehen, dass zueinander parallele Schlüsselangriffsflächenbereiche unterschiedlicher Schlüsselangriffsflächen-Formationen in einander diametral gegenüberliegenden Umfangsbereichen des Zerspan-Werkzeugs gelegen sind, so dass ein Drehmoment möglichst gleichmäßig über wenigstens zwei im Wesentlichen diametral einander gegenüberliegende Schlüsselangriffsflächenbereiche in das Zerspan-Werkzeug eingeleitet werden kann. Der Abstand zweier paralleler Schlüsselangriffsflächenbereiche voneinander bestimmt dann die für eine Drehmomenteinleitung in diese Schlüsselangriffsflächenbereiche benötigte Maul- oder Schlüsselweite. Auch hier gilt: aufgrund der relativ zueinander geneigten Anordnung der Schlüsselangriffsflächenbereiche der Schlüsselangriffsflächen-Formationen kann eine Maulschlüssel-Formation mit der benötigten Maul- oder Schlüsselweite verglichen mit dem Stand der Technik mit geringerer Maßtoleranz bereitgestellt und trotzdem einfach auf die Schüsselangriffsflächen-Formationen mit den geneigten Schlüsselangriffsflächenbereichen aufgeschoben werden, ohne dass hierfür trotz der engeren Maßtoleranzen ein unerwünschter Einfädelaufwand notwendig wäre. Die Folge der engeren Toleranzen ist wiederum eine vorteilhaft flächige Anlage von Schüsselflächenbereichen und Schlüsselangriffsflächenbereichen aneinander bei der Drehmomenteinleitung mit den oben bereits beschriebenen Wirkungen.

Grundsätzlich ist denkbar, an dem Zerspan-Werkzeug eine Vielzahl von Schlüsselangriffsflächen-Formationen vorzusehen. Tatsächlich reichen jedoch genau zwei einander gegenüberliegende Schlüsselangriffsflächen-Formationen zur Drehmomenteinleitung in das Zerspan-Werkzeug aus. Zur Minimierung des Fertigungsaufwands weist ein Zerspan-Werkzeug daher bevorzugt genau zwei Schlüsselangriffsflächen-Formationen auf.

Bevorzugt ist der Umfangsbereich zwischen den genau zwei Schlüsselangriffsflächen-Formationen frei von einer Schlüsselangriffsfläche und weist dort besonders bevorzugt einen Teilzylinderabschnitt auf. Die meisten Zerspan-Werkzeuge sind aus einem Zylinder, etwa aus Hartmetall und dergleichen, als Grundkörper gefertigt, so dass zur Ausbildung der Schlüsselangriffsflächen-Formationen nur die diese später tragenden Umfangsbereiche des zylindrischen Grundkörpers bearbeitet zu werden brauchen, während die in Umfangsrichtung zwischen den Schlüsselangriffsflächen-Formationen gelegenen Zerspan-Werkzeugbereiche ihre ursprüngliche teilzylindrische Gestalt beibehalten können. Dies verringert den zur Herstellung des Zerspan-Werkzeugs erforderlichen Fertigungsaufwand.

Ebenso kann eine Schlüsselangriffsflächen-Formation grundsätzlich eine beliebige Anzahl an Schlüsselangriffsflächenbereichen aufweisen, von welchen jeweils zwei in Umfangsrichtung unmittelbar benachbarte Schlüsselangriffsflächenbereiche relativ zueinander um einen Neigungswinkel geneigt sind. Da der zur Ausbildung einer Schlüsselangriffsflächen-Formation vorhandene Raum an einem Zerspan-Werkzeug begrenzt ist, werden die einzelnen Schlüsselangriffsflächenbereiche ein und derselben Schlüsselangriffsflächen-Formation mit zunehmender Anzahl in Umfangsrichtung kürzer. Um für einen Angriff eines Schlüssels eine ausreichend große Fläche bereitzustellen, ist es daher bevorzugt, wenn jede Schlüsselangriffsflächen-Formation genau zwei relativ zueinander geneigte Schlüsselangriffsflächenbereiche aufweist.

Die Maulschlüssel-Formation des Bauteilesatzes gemäß dem ersten Aspekt der vorliegenden Erfindung umfasst eine Mehrzahl von zur Erstreckungsebene nicht-orthogonalen Barriereflächen. Die Maulschlüssel-Formation gemäß dem dritten Aspekt der vorliegenden Erfindung umfasst wenigstens eine Barrierefläche, welche um eine zur Erstreckungsebene parallele Krümmungsachse gekrümmt ist.

Wegen des Schüssel-Schloss-Prinzips zwischen der wenigstens einer Schlüsselangriffsflächen-Formation und der wenigstens einen Schlüsselflächen-Formation gelten die oben zur Axialsicherungsformation genannten Vorteile für die Axialbarriereformation der Maulschlüssel-Formation mutatis mutandis entsprechend, wobei die zur Erstreckungsebene nicht-orthogonale Barrierefläche an der Maulschlüssel-Formation funktionell der oben genannten zur Werkzeugachse nicht-parallelen Anlagefläche am Zerspan-Werkzeug entspricht.

Da an der Maulschlüssel-Formation für sich alleine genommen eine Werkzeugachse ohne weiteres nicht feststellbar ist, dient als Bezugsebene für die Maulschlüssel-Formation ihre Erstreckungsebene, die bei idealem Werkzeugangriff der Maulschlüssel-Formation am Zerspan-Werkzeug orthogonal zur Werkzeugachse ausgerichtet ist.

In Entsprechung einer Mehrzahl von Anlageflächen der wenigstens einen Axialsicherungsformation umfasst auch die wenigstens eine Axialbarriereformation einer Schlüsselflächen-Formation der Maulschlüssel-Formation gemäß dem ersten Aspekt der vorliegenden Erfindung eine Mehrzahl von zur Erstreckungsebene nicht-orthogonalen Barriereflächen. Diese sind in einer Richtung orthogonal zur Erstreckungsebene aufeinander folgend angeordnet. Auch diese Barriereflächen können zur Verbesserung der Barrierewirkung gegen eine axiale Relativbewegung der Maulschlüssel-Formation relativ zur Schlüsselangriffsflächen-Formation des Zerspan-Werkzeugs längs der Erstreckungsebene bzw. parallel zur Erstreckungsebene verlaufende Nuten oder/und Vorsprünge bilden.

Um sicherzustellen, dass die zur Erstreckungsebene nicht-orthogonalen Barriereflächen zur Anlage an wie oben beschrieben angestellte Anlageflächen am Zerspan-Werkzeug gelangen können, ist bei der Maulschlüssel-Formation des Bauteilesatzes gemäß dem ersten Aspekt der vorliegenden Erfindung vorgesehen, dass die Barriereflächen um eine zur Erstreckungsebene parallele Abwinkelachse relativ zueinander abgewinkelt sind. Die Axialbarriereformation ist bei der Maulschlüssel-Formation des Bauteilesatzes für einen möglichst wirkungsvollen Formschlusseingriff mit einer Axialsicherungsformation wenigstens abschnittsweise komplementär zu dieser ausgebildet. Dementsprechend können die Barriereflächen der Maulschlüssel-Formation des Bauteilesatzes fertigungstechnisch einfach, aber dennoch hochgenau herstellbar eben sein. Alternativ oder zusätzlich kann eine Barrierefläche gekrümmt ausgebildet sein bzw. ist die wenigstens eine Barrierefläche der Maul-Schlüsselformation gemäß dem dritten

Aspekt der vorliegenden Erfindung gekrümmt ausgebildet, wobei wiederum zur Sicherstellung der Einführbarkeit des Zerspan-Werkzeugs in die Maulschlüssel-Formation längs der Einführachse die die Krümmung der Barrierefläche bestimmende wenigstens eine Krümmungsachse parallel zur Erstreckungsebene ausgerichtet ist und insbesondere parallel zur Einführachse ausgerichtet ist.

Auch für die gekrümmte Barrierefläche gilt, dass die Länge des Krümmungsradius ortsunabhängig konstant sein kann oder - bei bevorzugter Konstanz des Krümmungsradius längs der Krümmungsachse - ortsabhängig von der Winkelstellung des Krümmungsradius relativ zur Krümmungsachse variieren kann, etwa wenn in einem Scheitelbereich eines Vorsprungs oder einer Nut der wenigstens einen Axialbarriereformation ein kleinerer Krümmungsradius gewünscht ist als in Flankenbereichen des Vorsprungs oder/und der Nut. Wie bereits bei den gekrümmten Anlageflächen kann auch bei der wenigstens einen gekrümmten Barrierefläche die Krümmung abschnittsweise durch unterschiedliche, vorzugsweise parallele Krümmungsachsen definiert sein.

Zur Vermeidung unerwünschter Kippbewegungen beim Einleiten eines Drehmoments über die Maulschlüssel-Formation in ein rotierbares Zerspan-Werkzeug um die Einführachse ist bevorzugt vorgesehen, dass jede Schlüsselflächen-Formation eine Axialbarriereformation aufweist, vorzugsweise das die einander gegenüberliegenden Schlüsselflächen-Formationen bezüglich einer zur Erstreckungsebene orthogonalen Symmetrieebene spiegelsymmetrisch oder/und bezüglich einer zur Erstreckungsebene orthogonalen Symmetrieachse rotationssymmetrisch sind.

Mit der vorliegenden Erfindung können Schlüssel schnell und sicher in Anlageeingriff mit entsprechenden Schlüsselangriffsflächen-Formationen an Zerspan-Werkzeugen gebracht werden, wobei die Schlüssel dann sowohl gegen eine axiale Relativbewegung relativ zum Zerspan-Werkzeug gesichert sind als auch aufgrund der wenigstens einen vorgesehenen Anlagefläche/Barrierefläche - verglichen mit lediglich ebenen, zur Werkzeugachse parallelen bzw. zur Erstreckungsebene orthogonalen Schlüsselangriffsflächen bzw. Schlüsselflächen des Standes der Technik - eine erhöhte Kontaktfläche aufweisen und damit eine Übertragung eines größeren Drehmoments als im Stand der Technik gestatten.

Ein vorteilhaftes erleichtertes Einführen eines Zerspan-Werkzeugs in eine Maulschlüssel-Formation bzw. ein erleichtertes Aufschieben der Maulschlüssel-Formation auf eine Schlüsselangriffsflächen-Formation kann gemäß einer vorteilhaften Weiterbildung der Erfindung erreicht werden durch eine Maulschlüssel-Formation, deren beide Backen jeweils zwei Schlüsselflächenbereiche aufweisen, welche längs der Einführachse aufeinander folgen und welche derart voneinander weg geneigt sind, dass sie einen zur jeweils anderen Backe hin vorstehenden Scheitel bilden. Vorzugsweise ist der Neigungswinkel zwischen den zwei Schlüsselflächenbereichen einer jeden Backe kleiner als oder gleich 10°, vorzugsweise kleiner als oder gleich 7,5°, besonders bevorzugt kleiner als oder gleich 5° ist.

Durch die vorteilhaften geringen Neigungswinkel, wie sie oben genannt sind, wird einerseits ein Einführen der Schlüsselangriffsflächen-Formationen eines Zerspan-Werkzeugs in die Maulschlüssel-Formation erleichtert. Überdies wird eine flächige Anlage von Schlüsselflächenbereichen an Schlüsselangriffsflächenbereichen am Zerspan-Werkzeug gefördert, so dass eine unerwünschte Linien- oder gar Punktlast bei Drehmomenteinleitung, insbesondere in einem kantennahen Bereich an einem Umfangsrand eines Schlüsselangriffsflächenbereichs, vermieden werden kann. Schließlich wird durch die kleinen Neigungswinkel eine Totbewegung bei Drehrichtungsumkehr zwischen zwei Anlageeingriffen von Schlüsselflächenbereichen und Schlüsselangriffsflächenbereichen kleingehalten.

Eine solche Maulschlüssel-Formation kann auch mit erfindungsgemäßen Zerspan-Werkzeugen verwendet werden, deren Schlüsselangriffsflächenbereiche zueinander nicht geneigt sind.

Die Erleichterung des Einführens eines Zerspan-Werkzeugs bzw. seiner Schlüsselangriffsflächen-Formationen in die Maulschlüssel-Formation kann noch weiter dadurch gefördert werden, dass der Abstand zwischen den beiden maulöffnungsnäheren Schlüsselflächenbereichen der einander gegenüberliegenden Backen in Einführrichtung kleiner wird, mithin die maulöffnungsnäheren Schlüsselflächenbereiche in der Einführrichtung eine Art moderate Einführschräge bilden.

Zusätzlich oder alternativ kann der Abstand zwischen den beiden maulöffnungsferneren Schlüsselflächenbereichen in der Einführrichtung größer werden, so dass nur die beiden Scheitel der einander gegenüberliegenden Backen eine Engstelle der Maulschlüssel-Formation bilden, die in Einführrichtung jedoch kurz ist.

Die vorteilhafte Einleitung von Drehmoment in Schlüsselangriffsflächen-Formationen mit zwei zueinander und zur Werkzeugachse parallelen Schlüsselangriffsflächenbereichen über einen Flächenkontakt von Schlüsselflächenbereichen und zugeordneten Schlüsselangriffsflächenbereichen kann dadurch weiter verbessert werden, dass der maulöffnungsnähere Schlüsselflächenbereich der einen Backe zum maulöffnungsferneren Schlüsselflächenbereich der jeweils anderen, gegenüberliegenden Backe parallel ist. Dies gilt bevorzugt für die maulöffnungsnäheren Schlüsselflächenbereiche beider Backen. Somit kann außerdem bei flächiger Anlage der Schlüsselflächenbereiche an zugeordneten Schlüsselangriffsflächenbereichen ein möglichst großer Lastarm für die Drehmomenteinleitung genutzt werden. Der Lastarm ist bezogen auf die Werkzeugachse zu betrachten, um die herum das Zerspan-Werkzeug durch die Drehmomenteinleitung gedreht werden soll.

Um ein schnelles und einfaches Einführen des Zerspan-Werkzeugs bzw. seiner Schlüsselangriffsflächen-Formationen in die Maulschlüssel-Formation zu erreichen, kann in Einführrichtung zwischen der Maulöffnung und den beiden gegenüberliegenden maulöffnungsnäheren Schlüsselflächenbereichen eine sich in Einführrichtung verjüngende Einführschräge vorgesehen sein. Somit kann die Maulschlüssel-Formation zunächst eine grobe Einführschräge vorsehen, welche zu den maulöffnungsnäheren Schlüsselflächenbereichen hin führt. Diese Einführschräge kann einen Öffnungswinkel von mehr als 40° oder mehr als 50° haben. In der Praxis hat sich ein Öffnungswinkel von 60° bewährt. Die Flanken der Einführschräge bilden keine Schlüsselflächenbereiche, da bei Drehmomenteinleitung nach Herstellung eines ordnungsgemäßen Anlageeingriffs der Maulschlüssel-Formation mit einem Zerspan-Werkzeug keine Bauteil-Außenfläche des Zerspan-Werkzeugs in Kraft übertragende Anlage an eine Flanke der Einführschräge gelangt oder sich in einer solchen Anlage befindet.

Als Schlüsselflächenbereich ist daher nur jener Flächenbereich der Maulschlüssel-Formation anzusehen, welcher tatsächlich für einen Anlageeingriff mit einem Schlüsselangriffsflächenbereich des Zerspan-Werkzeugs zum Zwecke der Drehmomentübertragung ausgebildet ist. Für einen Schlüsselangriffsflächenbereich des Zerspan-Werkzeugs gilt mutatis mutandis das Entsprechende.

Die Einführschräge kann dabei längs der Einführachse eine beträchtliche Länge aufweisen, um die Schlüsselangriffsflächen-Formationen des Zerspan-Werkzeugs während eines Einführvorgangs zielgenau zu den nur geringfügig geneigten und damit einen wesentlich geringeren Öffnungswinkel bildenden Schlüsselflächenbereichen der Maulschlüssel-Formation zu führen. Hierzu kann vorgesehen sein, dass der von der Einführschräge beiderseits der Einführachse begrenzte Maulbereich eine längs der Einführachse zu messende Länge aufweist, welche größer als die längs der Einführachse zu messende Länge des von den maulöffnungsnäheren Schüsselflächenbereichen begrenzten Maulbereichs oder/und des von den maulöffnungsferneren Schüsselflächenbereichen begrenzten Maulbereichs ist.

Die Maulschlüssel-Formation kann an einem Maulschlüssel vorgesehen sein und kann insbesondere unlösbar mit dem Maulschlüssel verbunden sein. In diesem Falle ist für jede mögliche Maulweite ein gesonderter Maulschlüssel vorzusehen. Ein solcher Maulschlüssel hat zur gleichmäßigen und hochpräzisen Drehmomenteinleitung bevorzugt Handangriffe für eine Bedienperson beiderseits der Maulschlüssel-Formation. Die vorliegende Erfindung betrifft daher auch einen Maulschlüssel mit einer wie oben beschriebenen Maulschlüssel-Formation.

In vielen Fällen reicht es jedoch aus, lediglich einen Schlüssel-Rahmen bereitzustellen, in welchen Einsatzbauteile mit Maulschlüssel-Formationen unterschiedlicher Maulweite auswechselbar einsetzbar sind. Eine Maulschlüssel-Formation wie sie oben beschrieben wurde, kann daher an einem Einsatzbauteil für einen Schlüssel-Rahmen realisiert sein.

Zur Erzielung der mit der vorliegenden Erfindung verfolgten Wirkungen ist aus den oben bereits genannten Gründen erfindungsgemäß vorgesehen, dass die wenigstens eine Axialsicherungsformation und die wenigstens eine Axialbarriereformation zum Formschlusseingriff miteinander wenigstens abschnittsweise komplementär zueinander ausgebildet sind. Der Formschlusseingriff bildet dabei Hintergriffe bzw. Bewegungsbarrieren in axialer Richtung, also orthogonal zur Erstreckungsebene der Maulschlüssel-Formation, lässt jedoch eine Relativbewegung orthogonal zur Werkzeugachse bzw. in der Erstreckungsebene, genauer längs der Einführachse, der Maulschlüssel-Formation zu. Barriereflächen und zugeordnete Anlageflächen befinden sich bei Drehmomenteinleitung in das Werkzeug bevorzugt in flächiger Anlage aneinander.

Die Maulschlüssel-Formation ist bevorzugt an einem Bauteil aus Hartmetall oder Werkzeugstahl ausgebildet.

Im Falle eines Satzes von rotierbaren Zerspan-Werkzeugen mit unterschiedlichen Schlüsselweiten, etwa weil die einzelnen Zerspan-Werkzeuge unterschiedliche Durchmesser aufweisen, ist der Neigungswinkel zwischen zwei in Umfangsrichtung unmittelbar benachbarten Schlüsselangriffsflächenbereichen für alle Schlüsselweiten bevorzugt gleich groß. Entsprechendes gilt für einen Satz von unterschiedlichen Einsatzbauteilen mit Maulschlüssel-Formationen unterschiedlicher Schlüsselweite. Auch hier sind die Neigungswinkel, mit welchen unmittelbar benachbarte Schlüsselflächenbereiche voneinander weg geneigt sind, für alle Schlüsselweiten bevorzugt gleich groß.

Als Zerspan-Werkzeug im Sinne der vorliegenden Anmeldung kann auch ein in ein Spannfutter eingesetztes und dort mit einer Überwurfmutter gesichertes Werkzeug angesehen werden. Dieses Zerspan-Werkzeug muss keine Schraubverbindungs-Formation an einem ihrer Längsendbereiche aufweisen. Die wie oben beschrieben ausgebildete Schlüsselangriffsflächen-Formation ist dann an der Überwurfmutter ausgebildet. Die vorliegende Erfindung betrifft somit auch eine Überwurfmutter für ein WerkzeugSpannfutter mit Schlüsselangriffsflächen-Formationen, welche wie in der vorliegenden Anmeldung beschrieben ausgestattet sind. Insofern wird zur detaillierten Weiterbildung auch dieser Überwurfmutter auf den oben stehenden Text verwiesen, wobei der Begriff "Zerspan-Werkzeug" durch den Begriff "Spannfutter-Überwurfmutter" ersetzt gedacht sein soll.

Die vorliegende Erfindung wird nachfolgend anhand der beiliegenden Zeichnungen näher erläutert. Es stellt dar:
Fig. 1 eine Längsschnittansicht durch eine Werkzeugaufnahme für eine Maschinenspindel einer Werkzeugmaschine mit einer ersten Ausführungsform eines Zerspan-Werkzeugs eines erfindungsgemäßen Bauteilesatzes,
Fig. 2a eine Seitenansicht des Zerspan-Werkzeugs von Fig. 1,
Fig. 2b eine Querschnittsansicht in der Schnittebene IIb-IIb von Fig. 2a durch den die Schlüsselangriffsflächen-Formationen tragenden Axialabschnitt des Zerspan-Werkzeugs von Fig. 2a,
Fig. 3a eine Seitenansicht des Zerspan-Werkzeugs von Fig. 1 in einem zur Drehmomenteinleitung bereiten Anlageeingriff mit einer ersten Ausführungsform eines Einsatzbauteils eines Maulschlüssels eines erfindungsgemäßen Bausatzes, mit abschnittsweise komplementären Schlüsselflächen-Formationen,
Fig. 3b die Anordnung von Fig. 3a in Unteransicht längs der Werkzeugachse,
Fig. 4a die Ansicht von Fig. 3a als Längsschnittansicht in einer die Werkzeugachse enthaltenden Schnittebene,
Fig. 4b die Ansicht von Fig. 3b als Querschnittsansicht in der Erstreckungsebene F der Maulschlüssel-Formation gemäß Figuren 3a und 4a als Schnittebene IVb-IVb,
Fig. 5 eine Detailansicht des Längsschnitts von Fig. 4a in der gekröpften Schnittfläche V-V von Fig. 4b bzw. Fig. 6,
Fig. 6 eine Detailansicht der Querschnittsansicht von Fig. 4b
Fig. 7 eine perspektivische Ansicht einer zweiten Ausführungsform eines Einsatzbauteils eines erfindungsgemäßen Bauteilesatzes,
Fig. 8 eine perspektivische Detailansicht von Fig. 7 und
Fig. 9 Zerspan-Werkzeuge mit unterschiedlichen Profilgestalten von Axialsicherungsformationen bzw. Axialbarriereformationen, von welchen die Fig. 9a und 9b Zerspan-Werkzeuge eines Bauteilsatzes gemäß dem ersten Aspekt der vorliegenden Erfindung und die
Fig. 9c und 9d Zerspan-Werkzeuge gemäß dem zweiten Aspekt der vorliegenden Erfindung zeigen.

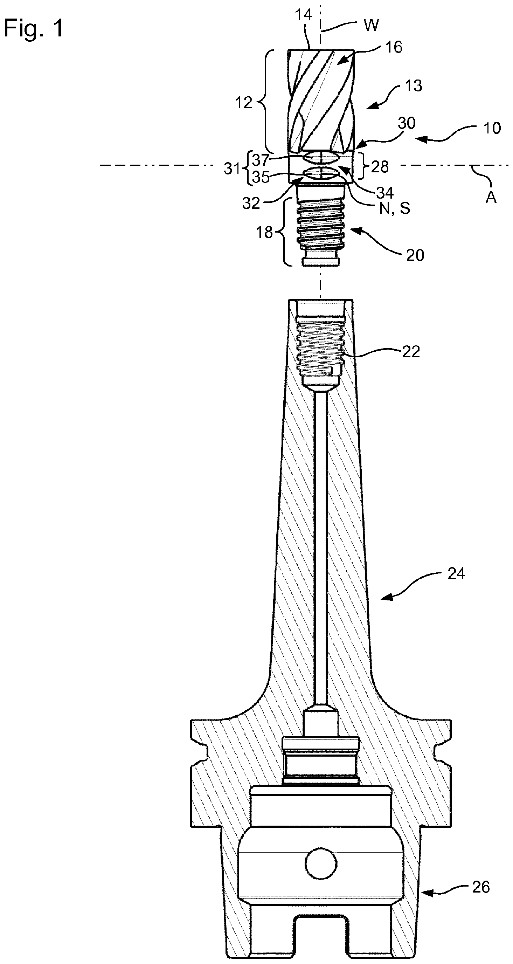

In Fig. 1 ist ein Zerspan-Werkzeug eines Bauteilsatzes gemäß dem ersten Aspekt der vorliegenden Erfindung in beispielhafter Form eines Fräskopfes allgemein mit 10 bezeichnet. Der Werkzeugkopf 10 erstreckt sich längs einer Werkzeugachse W, um welche der Werkzeugkopf 10 während seiner betriebsmäßigen spanenden Werkstückbearbeitung rotiert. In seinem einen axialen Längsendbereich 12 ist der Werkzeugkopf 10 mit einer Zerspan-Formation 13 versehen, vorliegend mit einer Mehrzahl von Schneiden 14 und wendelförmig um die Werkzeugachse W verlaufenden Spanabführnuten 16.

An seinem entgegengesetzten anderen Längsendbereich 18 ist der Werkzeugkopf 10 mit einer Schraubverbindungs-Formation, also mit einem Gewinde 20, versehen, welches in das Innengewinde 22 einer Werkzeugaufnahme 24 einschraubbar ist. Das Gewinde 20 muss nicht bis zum äußersten Längsende des Werkzeugkopfes 10 reichen. Die Werkzeugaufnahme 24 weist an ihrem dem Innengewinde 22 entgegengesetzten Längsende eine Kopplungsformation 26 zur Kopplung mit einer nicht dargestellten Maschinenspindel einer Werkzeugmaschine auf, im vorliegenden Beispiel eine Kopplungsformation 26 in Gestalt eines Hohlschaftkegels, etwa nach DIN 69893. Anstelle der Werkzeugaufnahme 24 kann der Werkzeugkopf 10 in ein - vorzugsweise zylindrisches - Schaftbauteil oder in eine Werkzeugaufnahme mit Steilkegel-Kopplungsformation eingedreht werden.

Werkzeugaufnahmen wie die Werkzeugaufnahme 24 in Fig. 1 sind allgemein bekannt und werden hier nicht weiter erläutert.

Der Werkzeugkopf 10 weist in einem Axialabschnitt 28, welcher zwischen den Längsendbereichen 12 und 18 gelegen ist, welcher sich aber mit dem die Zerspan-Formation 13 tragenden Längsendbereich 12 überlappen kann, eine Schlüsselangriffsflächen-Formation 30 mit einer Axialsicherungsformation 31 auf. Die Schlüsselangriffsflächen-Formation 30 weist zwei in Umfangsrichtung um die Werkzeugachse W unmittelbar benachbarte Schlüsselangriffsflächenbereiche 32 und 34 auf.

Diese Schlüsselangriffsflächen-Formation 30 bzw. die zu ihr gehörenden Schlüsselangriffsflächenbereiche 32 und 34 dienen unter anderem einem möglichst flächigen Anlageeingriff durch Schlüsselflächenbereiche eines Schlüssels, um den Werkzeugkopf 10 in das Innengewinde 22 der Werkzeugaufnahme 24 einzudrehen und wieder aus dieser auszudrehen.

Die beiden Schlüsselangriffsflächenbereiche 32 und 34 bilden gemeinsam eine untere Nut 35 und eine obere Nut 37, welche im vorliegenden Ausführungsbeispiel wiederum gemeinsam die zuvor bereits genannte Axialsicherungsformation 31 bilden.

Die Axialsicherungsformation 31 in Form der orthogonal zur Werkzeugachse W verlaufenden Nuten 35 und 37 gestattet das Aufschieben einer Maulschlüssel-Formation eines Schlüssels auf die Schlüsselangriffsflächen-Formation 30 längs einer zur Zeichenebene der Fig. 1 parallelen Aufschubachse A und sichert eine derart aufgeschobene Maulschlüssel-Formation durch Formschlusseingriff gegen eine Verlagerung in axialer Richtung längs der Werkzeugachse W. Dies wird nachfolgend noch im Einzelnen erläutert werden.

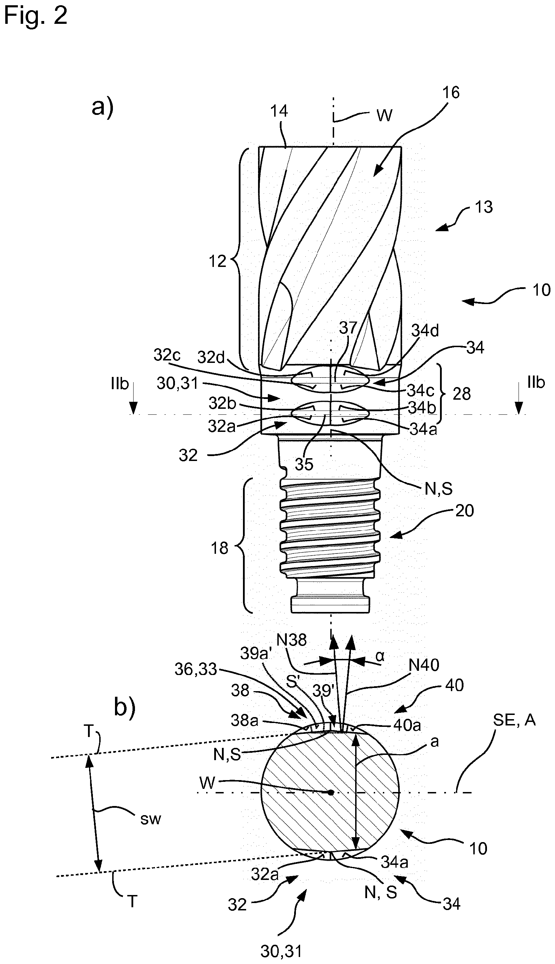

Der Werkzeugkopf 10 von Fig. 1 ist in Fig. 2a in der gleichen Ansicht, jedoch größer dargestellt. Eine Linie N am Übergang zwischen den Schlüsselangriffsflächenbereichen 32 und 34 deutet eine bevorzugt zur Werkzeugachse W parallele Neigungsachse an, um welche die Schlüsselangriffsflächenbereiche 32 und 34 voneinander weg geneigt sind, so dass sie einen Scheitel S bilden, welcher von der Werkzeugachse W weg vorsteht.

Auf der vom Betrachter der Fig. 2a abgewandten Seite ist eine weitere Schlüsselangriffsflächen-Formation 36 ausgebildet, welche bezüglich einer zur Zeichenebene von Fig. 2a parallelen Spiegelsymmetrieebene SE zur Schlüsselangriffsflächen-Formation 30 spiegelsymmetrisch ausgebildet ist (siehe auch Fig. 2b). Diese zweite Schlüsselangriffsflächen-Formation 36 weist dementsprechend eine weitere Axialsicherungsformation 33 auf. Sie weist weiter die Schlüsselangriffsflächenbereiche 38 und 40 auf, die ebenfalls um eine zur Werkzeugachse W orthogonale Neigungsachse N voneinander weg geneigt sind, und zwar um den gleichen Winkel von etwa 5°, um welchen auch die Schlüsselangriffsflächenbereiche 32 und 34 voneinander weg geneigt sind. Auch die Schlüsselangriffsflächenbereiche 38 und 40 bilden somit einen von der Werkzeugachse W weg vorstehenden Scheitel S.

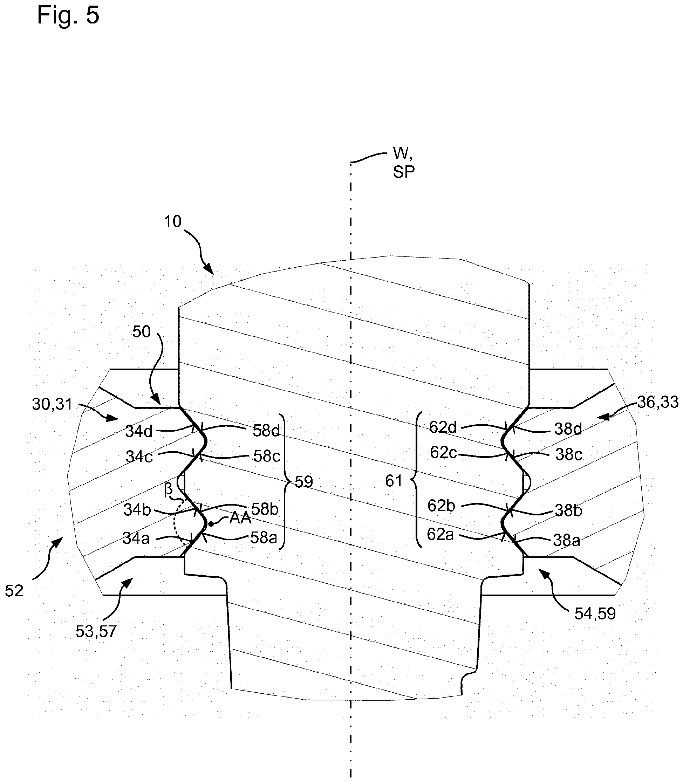

In Fig. 2a gut zu erkennen ist, ist die untere Nut 35 in axialer Richtung zum Längsendbereich 18 hin begrenzt durch eine relativ zur Werkzeugachse W geneigte Anlagefläche mit den Anlageflächenbereichen 32a und 34a. Die Anlageflächenbereiche 32a und 34a sind mit den beiden Schlüsselangriffsflächenbereichen 32 und 34 relativ zueinander um die Neigungsachse N geneigt. Die Anlageflächenbereiche 32a und 34a weisen, wie vor allem in Fig. 5 zu erkennen ist, zu dem die Zerspan-Formation 13 aufweisenden Längsendbereich 12 hin und bilden somit eine körperliche Barriere gegen eine axiale Relativverlagerung eines mit der Schlüsselangriffsflächen-Formation 30 zur Drehmomenteinleitung in Anlageeingriff stehenden Schlüssels zur Schraubverbindungs-Formation 20 hin.

Die untere Nut 35 ist zum Längsendbereich 12 hin durch Anlageflächenbereiche 32b und 34b hin begrenzt. Zwischen den beiden relativ zueinander angestellten Anlageflächenbereichen 32a und 32b bzw. 34a und 34b weist die Nut 35 einen den Nutgrund bildenden Scheitel mit zur Werkzeugachse W parallele Tangentialebene auf (siehe Fig. 5).

Bereits die untere Nut 35 für sich alleine genommen kann als Axialsicherungsformation ausreichen, da sie eine körperliche Barriere zu beiden entgegengesetzten Längsendbereichen zwölf und 18 hin bereitstellt und somit in der Lage ist, einen aufgeschobenen Schlüssel axial durch Formschluss zu sichern, sofern dieser dazu ausgebildet ist, radial in die Nut 35 einzugreifen.

Um für die Drehmomenteinleitung in das Zerspan-Werkzeug 10 eine ausreichend große Anlagefläche bereitstellen zu können, ist in der Schlüsselangriffsflächen-Formation 30 zusätzlich die obere Nut 37 gebildet, welche im Wesentlichen identisch zur unteren Nut 35 ausgebildet ist. Dies muss jedoch nicht so sein. Vorliegend ist die Nut 37 zum Längsendbereich 18 hin durch die Anlagenflächenbereiche 32c und 34c begrenzt und zum Längsendbereich 12 hin durch die Anlagenflächenbereiche 32d und 34d begrenzt. Bevorzugt sind die zum selben Längsende 12 bzw. 18 hin begrenzenden Anlageflächenbereiche ein und desselben Schlüsselangriffsflächenbereichs 32 oder/und 34 zueinander parallel. Daher sind die Anlageflächenbereiche 32a und 32c ebenso zueinander parallel wie die Anlageflächenbereiche 32b und 32d. Entsprechendes gilt für die Anlageflächenbereiche 34a und 34c sowie für die Anlageflächenbereiche 34b und 34d. Wegen der identischen Ausbildung der Nuten 35 und 37 derart, dass im vorliegenden Ausführungsbeispiel die Nut 35 durch rein translatorische axiale Verlagerung parallel zur Werkzeugachse W in die Nut 37 überführbar ist, wird zur weiteren Definition der Nut 37 auf die oben angegebene Beschreibung der Nut 35 verwiesen.

Es sei an dieser Stelle klargestellt, dass die Nuten 35 und 37 nicht über unterschiedliche Schlüsselangriffsflächenbereiche hinweg verlaufen müssen, sondern dass eine dieser Nuten oder beide Nuten durch lediglich zwei gegeneinander um eine zur Werkzeugachse orthogonale Anstellachse AA (siehe Fig. 5) um einen Anstellwinkel β angestellte Anlagenflächenbereiche, etwa die Anlagenflächenbereiche 32a und 32b, axial begrenzt sein kann, die dann nicht noch zusätzlich um die zur Anstellachse AA orthogonale Neigungsachse N voneinander weg geneigt sind und die deshalb keinen Scheitel S bilden.

Die Schnittebene IIb-IIb von Fig. 2a, welche die Ansicht von Fig. 2b bestimmt, verläuft orthogonal zur Werkzeugachse W. Somit sind die Werkzeugachse W sowie die Neigungsachsen N orthogonal zur Zeichenebene der Fig. 2b.

In Fig. 2b ist der Normalenvektor N38 des Schlüsselangriffsflächenbereichs 38 und der Normalenvektor N40 des Schlüsselangriffsflächenbereichs 40 mit ihren Fußpunkten in denselben Ort verschoben dargestellt. Die beiden Normalenvektoren N38 und N40 schließen den Neigungswinkel α der Schlüsselangriffsflächenbereiche 38 und 40 ein. Aus Gründen der Übersichtlichkeit der Darstellung der Fig. 2b sind die Normalenvektoren nur an den Schlüsselangriffsflächenbereichen 38 und 40 gezeigt, für die verbleibenden Schlüsselangriffsflächenbereiche 32 und 34 gilt Entsprechendes.

Da die Schlüsselangriffsflächenbereiche 32, 34, 38 und 40 des Zerspan-Werkzeugs 10 im Ausführungsbeispiel in Umfangsrichtung um die Werkzeugachse gleich lang sind, sind die Schlüsselangriffsflächen-Formationen 30 und 36 ebenso wie die in ihnen ausgebildeten Axialsicherungsformationen 31 und 33 auch bezüglich der Werkzeugachse W als Rotationssymmetrieachse rotationssymmetrisch zueinander. Die Schlüsselangriffsflächen-Formationen 30 und 36 einschließlich ihrer jeweiligen Axialsicherungsformationen 31 und 33 sind somit durch Drehung um 180° um die Werkzeugachse W ineinander überführbar.

In der Symmetrieebene SE liegt die zur Werkzeugachse W orthogonale Aufschubachse A, längs welcher ein Schlüssel, genauer: eine Maulschlüssel-Formation des Schlüssels, auf die Schlüsselangriffsflächen-Formationen 30 und 36 aufgeschoben werden kann, um eine Bereitschaftsstellung für eine Drehmomenteinleitung in die Schlüsselangriffsflächenbereiche 32 und 40 einerseits oder 34 und 38 andererseits - je nach Drehrichtung - herzustellen.

Die in diametral einander gegenüberliegenden Umfangsbereichen gelegenen Schlüsselangriffsflächenbereiche 32 und 40 einerseits und 34 und 38 andererseits sind bevorzugt zueinander parallel. Diese Parallelität bedeutet zunächst, dass die in den Schlüsselangriffsflächenbereichen 32a und 40a gelegenen Nutgründe zueinander parallel sind und dass die in den Schlüsselangriffsflächenbereichen 34a und 38a gelegenen Nutgründe zueinander parallel sind. Bei bevorzugtem gleichen Anstellwinkel β der die Beteiligten Nuten axial begrenzenden Anlageflächenbereiche sind dann beispielsweise auch die Angriffs Flächenbereiche 32a und 40b sowie 40a und 32b zueinander parallel, ebenso wie die Paare von Anlageflächenbereichen 34a und 38b sowie 38a und 34b. Für die oberen Nuten gelten diese bevorzugten Bedingungen entsprechend.

Die Umfangsbereiche zwischen den Schlüsselangriffsflächen-Formationen 30 und 36 weisen die ursprüngliche teilzylindrische Gestalt des Zylinder-Rohlings auf, aus dem das beispielhaft dargestellte Zerspan-Werkzeug 10 gefertigt wurde.

Wie in Fig. 2b gut zu erkennen ist, bilden die über die Aufschubachse A hinweg einander gegenüberliegenden Schlüsselangriffsflächenbereiche 34 und 40 einerseits sowie 32 und 38 andererseits aufgrund ihrer geneigten Anordnung relativ zur Werkzeugachse W eine Aufschubhilfe für eine längs der Aufschubachse A auf die Schlüsselangriffsflächen-Formationen 30 und 36 aufzuschiebende Maulschlüssel-Formation. Ein zwischen über die Aufschubachse A hinweg einander gegenüberliegenden Schlüsselangriffsflächenbereichen 34 und 40 oder 32 und 38 bestehender Abstand a wird aufgrund der relativ zueinander geneigten Anordnung der Schlüsselangriffsflächenbereiche mit zunehmender Entfernung von der Werkzeugachse W längs der Aufschubachse kleiner, so dass die genannten Schlüsselangriffsflächenbereichs-Paare 34 und 40 sowie 32 und 38 jeweils eine Art Aufschub- bzw. Einführschräge für eine aufzuschiebende Maulschlüssel-Formation bilden.

Die für eine Drehmomenteinleitung in das Zerspan-Werkzeug 10 geeignete Schlüsselweite sw ergibt sich durch den Abstand der Tangentialebenen T an die Nutgründe von zueinander parallelen Schlüsselangriffsflächenbereichen 32 und 40 einerseits und 34 und 38 andererseits. In Fig. 2b sind die Schlüsselweite sw für das Schlüsselangriffsflächenbereichs-Paar 34 und 38 definierenden die Tangentialebenen T strichliniert angedeutet. Da die Schlüsselweite sw wesentlich größer ist als der Abstand a, gemessen an dem von der Werkzeugachse W weitest entfernt gelegenen Ort der jeweiligen Schlüsselangriffsflächenbereichs-Paare kann einerseits die Maulschlüssel-Formation mit sehr geringer Maßtoleranz gefertigt und bereitgestellt werden und dennoch ohne aufwendiges Einfädeln auf die Schlüsselangriffsflächen-Formationen 30 und 36 aufgeschoben werden. Die Schlüsselweite sw ist für beide Schlüsselangriffsflächenbereichs-Paare gleich groß.

Aufgrund der so mit lediglich geringen Maßtoleranzen bereitgestellten hochgenau passenden Maulschlüssel-Formation kann eine flächige Anlage von Schlüsselflächenbereichen der Maulschlüssel-Formation zur Einleitung eines Drehmoments in den Werkzeugkopf 10 flächig an den Schlüsselangriffsflächenbereichen 32 und 40 einerseits oder 34 und 38 andererseits anliegen, so dass aufgrund der höheren Berührfläche - diese ist insbesondere durch die Vervielfachung der Berührfläche aufgrund der vorgesehenen zur Werkzeugachse geneigten Anlageflächen erhöht - auch ein höheres Drehmoment in den Werkzeugkopf eingeleitet werden kann, ohne dass eine Beschädigung der Schlüsselangriffsflächen-Formationen 30 und 36 zu befürchten ist.

In Fig. 2b ist eine alternative Ausführungsform der Schlüsselangriffsflächen-Formation 36 mit punktierten Linien und Bezugslinien dargestellt. Der Scheitel S' dieser Gestaltungsalternative ist nicht spitz, sondern abgeplattet. Dies wird konstruktiv dadurch erreicht, dass in Umfangsrichtung um die Werkzeugachse W zwischen Schlüsselangriffsflächenbereichen 38 und 40 ein Zwischenflächenbereich 39' angeordnet ist. Der Scheitel S' ist dann in Umfangsrichtung über den Zwischenflächenbereich 39' gestreckt. Die Schlüsselangriffsflächenbereiche 38 und 40 sind im Falle eines zwischen diesen vorgesehenen Zwischenflächenbereichs 39' in Umfangsrichtung kürzer ausgebildet, jedoch mit unverändertem Neigungswinkel Winkel a. Die Lage der Neigeachse N ist daher unabhängig von der Ausbildung des Scheitels als spitzer Scheitel S oder als abgeplatteter Scheitel S' die gleiche.

Auch im Zwischenflächenbereich 39' kann zur Sicherung der Axialposition eines Werkzeugangriffs wenigstens eine Anlagefläche 39a' ausgebildet sein. Bevorzugt setzen sich die Anlageflächen 38a und 40a in Umfangsrichtung um die Werkzeugachse über den Zwischenflächenbereich 39' fort und bilden dort Anlageflächen 39a', 39b', 39c' und 39d' (vgl. die Darstellung der Anlageflächen 38a bis 38d in Fig. 5).

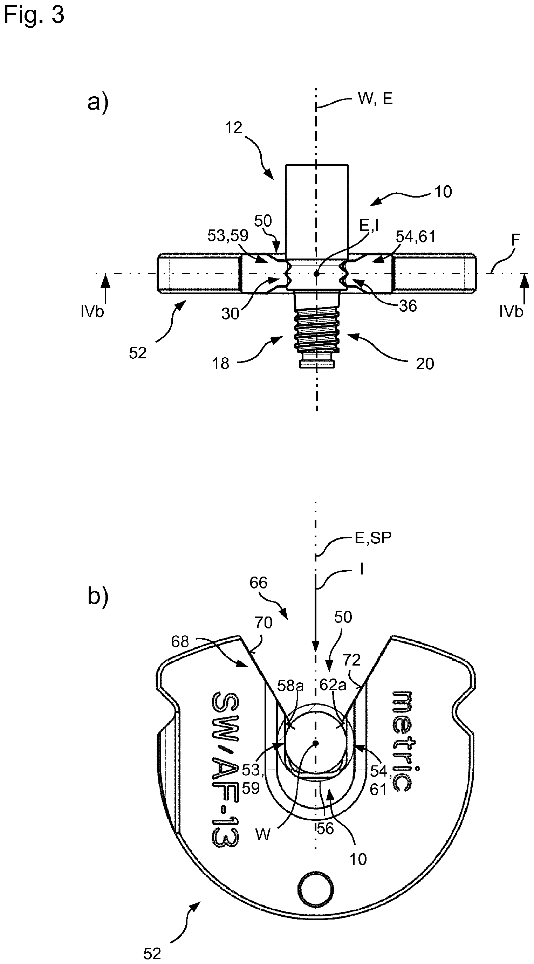

Für eine Drehmomenteinleitung in die Schlüsselangriffsflächen-Formationen 30 und 36 dient eine Maulschlüssel-Formation mit abschnittsweise komplementär zu den Anlageflächenbereichen des Werkzeugkopfes 10 ausgebildeten Barriereflächen, die selbst nicht durch Neigung relativ zueinander um eine Neigungsachse N geneigt zu sein brauchen. Eine solche Maulschlüssel-Formation ist als Maulschlüssel-Formation 50 beispielhaft an einem Einsatzbauteil 52 für einen Schlüssel-Rahmen in den Fig. 3 bis 6 dargestellt.

Fig. 3a zeigt eine Ansicht des Einsatzbauteils 52 entlang der Einführachse E, mit der Maulschlüssel-Formation 50 in einer für eine Drehmomenteinleitung in die Schlüsselangriffsflächenbereiche 34 und 38 bereiten Eingriffsstellung. Es handelt sich dabei um eine erste Ausführungsform einer erfindungsgemäßen Maulschlüssel-Formation 50 gemäß dem ersten Aspekt der vorliegenden Erfindung.

Das Einsatzbauteil 52 mit der Maulschlüssel-Formation 50 ist ein im Wesentlichen ebenes Gebilde, welches sich in der zur Zeichenebene von Fig. 3a orthogonalen sowie zur Zeichenebene von Fig. 3b parallelen Erstreckungsebene F erstreckt.

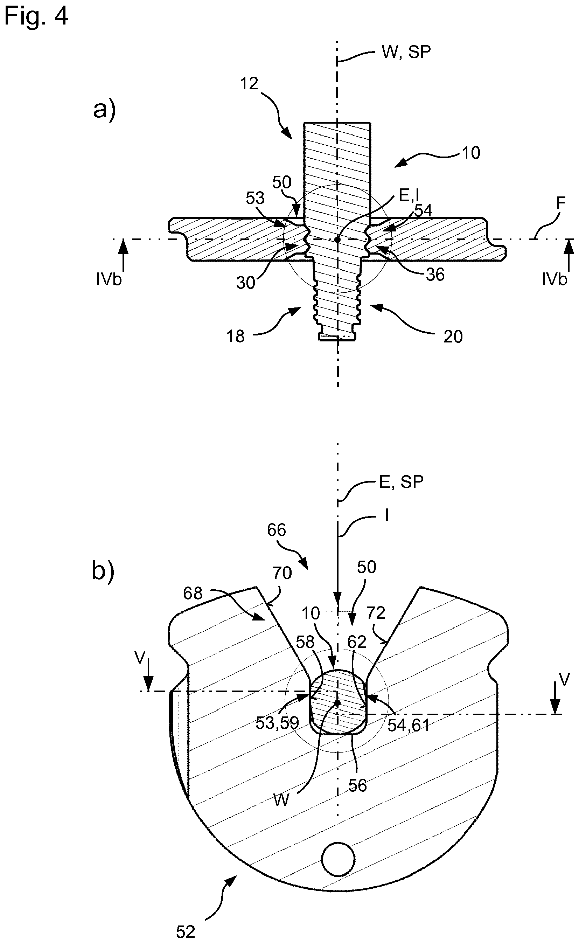

In Fig. 3b ist die Anordnung aus Werkzeugkopf 10 und Einsatzbauteil 52 in der Bereitschaftsstellung für eine Drehmomenteinleitung in der Unteransicht längs der Werkzeugachse W bzw. in einer Richtung orthogonal zur Erstreckungsebene F dargestellt. Die Figuren 4a und 4b zeigen denselben Gegenstand wie die Figuren 3a und 3b und stimmen in ihrer Blickrichtung mit jener der Figuren 3a bzw. 3b überein. Die Figuren 4a und 4b zeigen lediglich Schnittdarstellungen derselben Gegenstände, nämlich die Fig. 4a in einer die Werkzeugachse W enthaltenden und zur Zeichenebene von Fig. 3a parallelen Schnittebene und die Fig. 4b mit der Ebene F als Schnittebene IVb-IVb. Die Pfeile in Fig. 3a und 4a geben die Blickrichtung auf die Schnittebene IVb-IVb an. Das Einsatzbauteil 52 weist einander über die Einführachse E hinweg gegenüberliegende Backen 53 und 54 auf, welche durch eine Basis 56 über die Einführachse E hinweg miteinander verbunden sind. Der Pfeil I gibt die Einführrichtung an, in welcher der Werkzeugkopf 10 längs der Einführachse E in die Maulschlüssel-Formation 50 des Einsatzbauteils 52 einführbar ist.

An der Backe 53 ist eine Schlüsselflächen-Formation 58 ausgebildet, welche in Figur 5 näher dargestellt ist und an der Backe 54 ist eine Schlüsselflächen-Formation 62 ausgebildet, welche ebenfalls in Figur 5 näher erläutert ist. Die Schlüsselflächen-Formation 58 weist eine Axialbarriereformation 59 auf und die Schlüsselflächen-Formation 62 weist eine Axialbarriereformation 61 auf. Die Axialbarriereformationen 59 und 61 dienen in Kooperation mit den oben beschriebenen Axialsicherungsformationen 31 und 33 der axialen Positionssicherung der Maulschlüssel-Formation 50, wenn sich diese in einer zur Drehmomenteinleitung in den Werkzeugkopf 10 bereiten Anlageeingriffsstellung befindet. In dieser Stellung befindet sich die Schlüsselflächen-Formation 58 in Anlageeingriff mit wenigstens einem Abschnitt der Schlüsselangriffsflächen-Formation 30 und befindet sich die Schlüsselflächen-Formation 62 in Anlageeingriff mit wenigstens einem Abschnitt der Schlüsselangriffsflächen-Formation 36.

Im dargestellten Beispiel befindet sich die Schlüsselflächen-Formation 58 in Anlageeingriff mit dem Schlüsselangriffsflächenbereich 34 und befindet sich die Schlüsselflächen-Formation 62 in Anlageeingriff mit dem Schlüsselangriffsflächenbereich 38. Dies liegt jedoch an der im Ausführungsbeispiel gewählten Drehrichtung zur Drehmomenteinleitung.

Das Einsatzbauteil weist eine Maulöffnung 66 auf, von der aus der Werkzeugkopf 10 in Einführrichtung I längs der Einführachse E in die Maulschlüssel-Formation 50 einführbar ist. Zur Erleichterung der Einführung ist zwischen der Maulöffnung 66 und der Maulöffnung-Formation 50 eine Einführschräge 68 ausgebildet, welche durch zwei Flanken 70 und 72 begrenzt ist, deren orthogonal zur Einführachse E gemessener Abstand voneinander in Einführrichtung I abnimmt und somit einen einzuführenden Werkzeugkopf 10 sicher zur Maulschlüssel-Formation 50 hin führt. Die Flanken 70 und 72 weisen im dargestellten Beispiel einen Öffnungswinkel von etwa 60° auf.

Die Basis 56 bildet einen Maulöffnungs-fernen Abschluss der zur Maulöffnung 66 hin offenen Maulschlüssel-Formation 50.

In dem in den Figuren 3 bis 6 dargestellten ersten Ausführungsbeispiel einer Maulschlüssel-Formation 50 eines erfindungsgemäßen Bauteilesatzes, sind die Schlüsselflächen-Formationen 58 und 62 nicht weiter in zueinander geneigte, einen Scheitel bildende Schlüsselflächenbereiche unterteilt, sondern verlaufen im Wesentlichen parallel zur Einführachse E.

Die Maulschlüssel-Formation 50 ist zur erleichterten Handhabung bevorzugt spiegelsymmetrisch zur Symmetrieachse SP ausgebildet, welche die Einführachse E enthält und welche zur Erstreckungsebene F der Maulschlüssel-Formation 50 orthogonal orientiert ist.

Wie die Figuren 3a, 4a und 5 zeigen, ist die Dicke des Einsatzbauteils 52 im Bereich der Maulöffnung-Formation 50 dünner als in den von der Maulöffnungs-Formation 50 weiter entfernt gelegenen Bereichen. Dies hat den Vorteil, dass die tatsächlich mit einer Schlüsselangriffsflächen-Formation des Werkzeugkopfes 10 in Eingriff tretende Formation am Einsatzbauteil 52 axial kurz gehalten werden kann, was unnötige und unerwünschte Kollisionen von Bauteilabschnitten des Einsatzbauteils 52 mit dem Werkzeugkopf 10 vermeidet.

Das Einsatzbauteil 52 kann selbst ebenfalls spiegelsymmetrisch zur Symmetrieebene SP ausgebildet sein, ist im dargestellten Ausführungsbeispiel jedoch rotationssymmetrisch um die Einführachse E symmetrisch ausgebildet. Die Schlüsselflächen-Formationen 58 und 62 sind nicht nur spiegelsymmetrisch zur Symmetrieebene SP, sondern auch rotationssymmetrisch um eine zur Erstreckungsebene F orthogonale Symmetrieachse ausgebildet, welche im Falle einer idealen Drehmomenteinleitung in einen Werkzeugkopf 10 mit dessen Werkzeugachse W zusammenfällt.

Wie in Figur 5 gezeigt ist, weist die Schlüsselflächen-Formation 58 insgesamt vier zur Erstreckungsebene F nicht-orthogonale Barriereflächen 58a bis 58d auf, welche von der Erstreckungsebene F weg aufeinanderfolgend angeordnet sind. Dabei sind zwei unmittelbar aufeinanderfolgende Barriereflächen relativ zueinander um eine zur Einführachse E parallele Abwinkelachse abgewinkelt, um dadurch einen zur jeweils anderen Backe 54 bzw. zur jeweils anderen Schlüsselflächen-Formation 62 hin vorstehenden Vorsprung zu bilden.

Die Barriereflächen 58a und 58b bilden somit die Flanken eines unteren Vorsprungs und die Barriereflächen 58c und 58d bilden die Flanken eines oberen Vorsprungs. Aufgrund der oben geschilderten Symmetriebedingung wird zur Beschreibung der an der Schlüsselflächen-Formation 62 ausgebildeten Barriereflächen 62a bis 62d auf die obige und noch weitere Beschreibung der Barriereflächen 58a bis 58d verwiesen.

Da die Barriereflächen 58a bis 58d möglichst großflächig in Kontakt mit der Schlüsselangriffsflächen-Formation 30 oder 36 gelangen können sollen, entspricht der Winkel zwischen den Barriereflächen 58a und 58b sowie zwischen den Barriereflächen 58c und 58d dem Anstellwinkel α der Anlageflächen der Schlüsselangriffsflächen-Formationen 30 und 36. Die Abwinkelachse fällt außerdem mit der zuvor beschriebenen Anstellachse AA zusammen.

Wie weiter in Figur 5 zu erkennen ist, liegen die Barriereflächen 58i an den jeweils zugeordneten Anlageflächen 34i (mit i = a ... d) flächig an, was gegenüber einer im gleichen Axialbereich parallel zur Werkzeugachse W verlaufenden ebenen Schlüsselangriffsflächen-Formation und Schlüsselflächen-Formation eine erheblich vergrößerte Kontaktfläche bedeutet, die auch die Übertragung eines - verglichen mit dem definierten Vergleichszustand - erhöhten Drehmoments gestattet.

Die Barriereflächen 58a bis 58d bilden die Axialbarriereformation 59. Diese befindet sich bei Drehmomenteinleitung in den Werkzeugkopf in Formschlusseingriff mit der werkzeugseitigen Axialsicherungsformation 31. Dabei ist insbesondere der durch die Barriereflächen 58a und 58b gebildete untere Vorsprung in Formschlusseingriff mit der unteren Nut 35 und ist der durch die Barriereflächen 58c und 58d gebildete obere Vorsprung in Formschlusseingriff mit der oberen Nut 37. Da die Barriereflächen 58a bis 58d und mit ihnen die durch sie gebildeten Vorsprünge zwar zur Erstreckungsebene der Maulschlüssel-Formation 50 nicht-orthogonal sind, jedoch parallel zur Einführachse E und damit parallel zur Erstreckungsebene F verlaufen, behindern die Barriereflächen 58a bis 58d ein Aufschieben der Maulschlüssel-Formation 50 auf die Schlüsselangriffsflächen-Formationen 30 und 36 des Werkzeugkopfes 10 nicht, sichern jedoch zusammen mit der Axialsicherungsformation 31 die Maulschlüssel-Formation in ihrer axialen Position relativ zu der Werkzeugachse W eines in die Maulschlüssel-Formation 50 eingeführten Werkzeugkopfes.

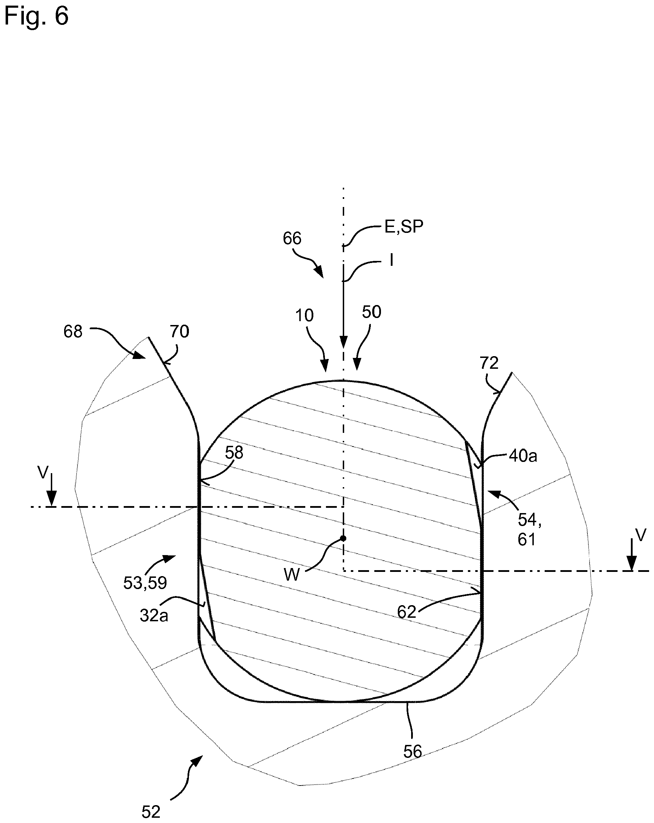

In Figur 6 ist das in Figur 4b mit Kreis angezeigte Detail der Eingriffssituation zwischen Maulschlüssel-Formation 50 und Werkzeugkopf 10 vergrößert dargestellt. Zu erkennen ist wiederum, wie die Anlageflächen der Schlüsselangriffsflächenbereiche 32 und 40 mit Abstand von den Schlüsselflächen-Formationen 58 und 62 angeordnet sind, während die Schlüsselangriffsflächenbereiche 34 und 38 mit den genannten Schlüsselflächen-Formationen 58 und 62 in Anlageeingriff stehen.

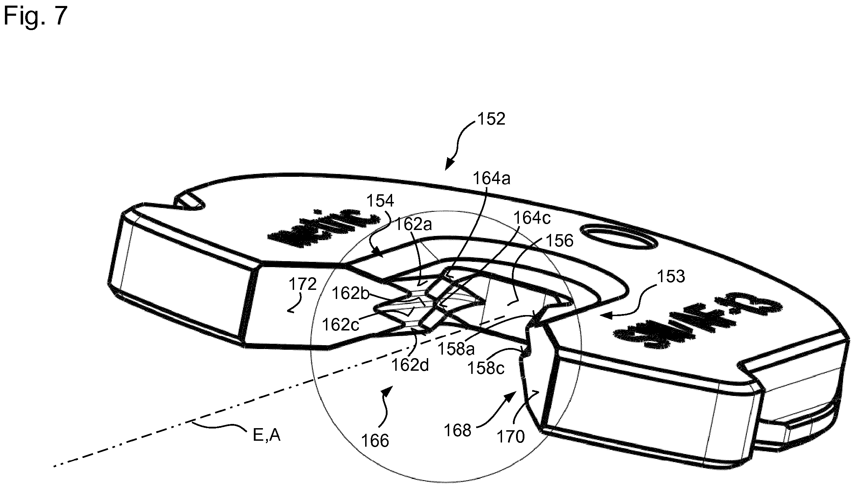

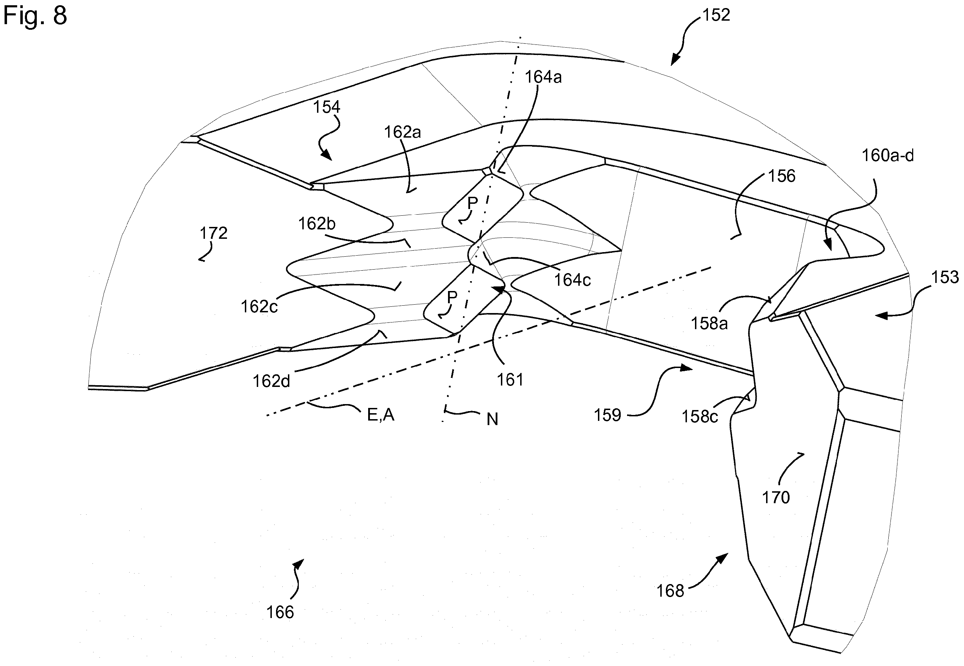

Die Schlüsselflächen-Formationen 58 und 62 müssen jedoch nicht, wie in der ersten Ausführungsform der Maulschlüssel-Formation, parallel zur Einführachse E verlaufen. Diese können in kinematischer Umkehr zu den mit relativ zueinander geneigten Schlüsselangriffsflächenbereichen der Schlüsselangriffsflächen-Formationen 30 und 36 mit ebenfalls relativ zueinander geneigten Schlüsselflächenbereichen ausgebildet sein, um die zuvor im Zusammenhang mit den relativ zueinander geneigten Schlüsselangriffsflächenbereichen 32 und 34 sowie 38 und 40 beschriebenen Vorteile auch mit einer Maulschlüssel-Formation 50 zu erzielen. Ein derartiges zweites Ausführungsbeispiel einer Maulschlüssel-Formation eines erfindungsgemäßen Bauteilesatzes ist in den Figuren 7 und 8 dargestellt. Dieses wird nachfolgend nur insoweit beschrieben werden, als es sich von dem oben beschriebenen ersten Ausführungsbeispiel unterscheidet, auf deren Beschreibung ausdrücklich verwiesen wird. Gleiche und funktionsgleiche Bauteile bzw. Bauteilabschnitte wie in der ersten Ausführungsform sind in den Figuren 7 und 8 mit gleichen Bezugszeichen versehen wie in den Figuren 1 bis 6, jedoch erhöht um die Zahl 100.

In den Figuren 7 und 8 weisen die Backen 153 und 154 jeweils zwei Schlüsselflächenbereiche auf, nämlich die Backe 153 die Schlüsselflächenbereiche 158 und 160 und die Backe 154 die Schlüsselflächenbereiche 162 und 164. Wie in der Detaildarstellung von Figur 8 zu erkennen ist, sind die Schlüsselflächenbereiche 162 und 164 relativ zueinander um eine Neigungsachse N geneigt, und zwar derart, dass sie einen zur jeweils anderen Backe, hier: Backe 153, vorstehenden Scheitel P bilden.

Mit den Schlüsselflächenbereichen 162 und 164, die in Figur 8 besser zu erkennen sind als die Schlüsselflächenbereiche 158 und 160, sind auch die in den jeweiligen Schlüsselflächenbereichen gebildeten Barriereflächen 162a bis 162d relativ zu den sich auf jeweils gleicher Axialposition befindenden längs der Einführachse benachbarten Barriereflächen 164a bis 164d um die Neigungsachse N abgewinkelt. Der Neigungswinkel beträgt etwa 5°. Mit diesem Neigungswinkel kann nicht nur ein Einführen von Schlüsselangriffsflächen-Formationen eines Werkzeugkopfes in die Maulschlüssel-Formation 150 erleichtert werden, da sich die Schlüsselflächenbereiche 162 und 158 von ihrem maulöffnungsnäheren Ende zum Scheitel P hin einander annähern, sondern es kann die Maulöffnungs-Formation 150 mit engeren Toleranzen gefertigt werden, ohne dass ein Aufschieben der Maulschlüssel-Formation 150 auf Schlüsselangriffsflächen-Formationen am Werkzeugkopf dadurch erschwert werden würde. Aufgrund der geringeren Maßtoleranzen kann jedoch eine möglichst flächige Anlage der Schlüsselflächenbereiche 158 und 164 einerseits oder 162 und 160 andererseits an entsprechenden Schlüsselangriffsflächenbereichen am Werkzeugkopf sichergestellt werden. Auch dies erleichtert die Einleitung eines Drehmoments in den Werkzeugkopf erheblich.

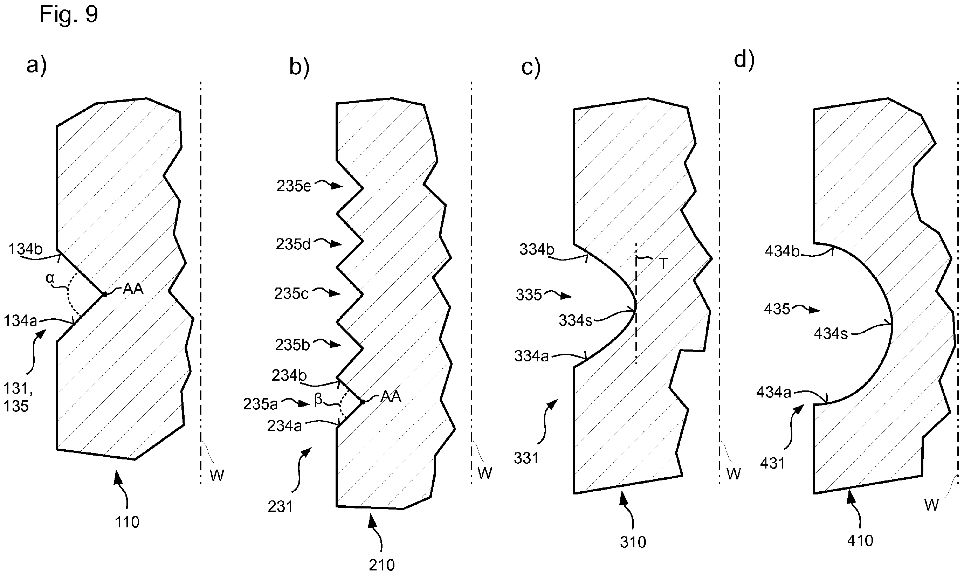

In Figur 9 sind in den Unterfiguren 9a bis 9d unterschiedliche mögliche Profile von Axialsicherungsformationen bzw. Axialbarriereformationen gezeigt.

In Figur 9 sind die unterschiedlichen Profile jeweils anhand eines Zerspan-Werkzeugs bzw. Werkzeugkopfes gezeigt, wobei für Fachleute ohne Weiteres verständlich ist, dass vergleichbare Profile auch an Maulschlüssel-Formationen ausgebildet sein können. Darüber hinaus sind in Figur 9 alle Profile als Nutenprofile dargestellt. Selbstverständlich können die in den Figuren 9a bis d gezeigten Profile für Axialsicherungsformationen bzw. Axialbarriereformationen auch als zu den dargestellten Profilen gebildete Positivformationen mit entsprechend komplementären Vorsprüngen ausgebildet sein.

In Figur 9a ist ein Zerspan-Werkzeug 110 eines Bauteilesatzes gemäß dem ersten Aspekt der Erfindung dargestellt, welches eine einzelne Nut zeigt, die durch zwei relativ zueinander um eine zur Aufschubachse A parallele Anstellachse AA um einen Winkel β angestellte Anlageflächen 134a und 134b begrenzt ist. Die Nut 135 der Axialsicherungsformation 131 von Figur 9a ist im Nutgrund spitzer ausgebildet als jene Nuten 35 und 37 der ersten Ausführungsform. Die Axialsicherungsformation 231 von Figur 9b entspricht im Wesentlichen jener von Figur 9a mit dem Unterschied, dass eine Mehrzahl von längs der Werkzeugachse W unmittelbar aneinander anschließenden Nuten 235a bis 235e vorgesehen ist. Die Nuten 235a bis 235e sind vorzugsweise identisch ausgebildet, sodass aus Gründen der Übersichtlichkeit lediglich die Nut 235a mit weiteren Bezugszeichen versehen ist.

Das Zerspan-Werkzeug 310 von Figur 9c gemäß dem zweiten Aspekt der Erfindung weist beispielhaft wiederum eine einzige Nut 335 auf, die durch eine gekrümmte Fläche begrenzt ist. Die Besonderheit an der Nut 335 der Ausführungsform von Figur 9c liegt in der Krümmung der die Nut 335 begrenzenden Fläche. So weist die Nut 335 an ihrem unteren und oberen Nutrand jeweils Anlageflächenbereiche 334a bzw. 334b auf, welche einen größeren Krümmungsradius aufweisen als der Bereich 334s in einem Scheitelabschnitt der Nut 335 mit zur Werkzeugachse W paralleler Tangentialebene T.

Die Ausführungsform von Figur 9d gemäß dem zweiten Aspekt der Erfindung zeigt dagegen eine teilkreiszylindrische Nut 435 mit konstantem Krümmungsradius für die gesamte die Nut begrenzende Oberfläche. Die Krümmungsachsen der Ausführungsformen von Figuren 9c und 9d sind jeweils orthogonal zur Werkzeugachse W und parallel zur Aufschubachse A. Diese ist in Figur 9 jeweils orthogonal zur Zeichenebene der Figur 9.

## Patentansprüche

1. Bauteilesatz mit einem rotierbaren Zerspan-Werkzeug (10; 110; 210; 310; 410), insbesondere Werkzeugkopf (10; 110; 210; 310; 410), wie etwa Fräs-, Schleif- oder Bohrkopf, und mit einem Maulschlüssel oder mit einem Einsatzbauteil, umfassend eine Maulschlüssel-Formation (50; 150),
- wobei sich das Zerspan-Werkzeug (10; 110; 210; 310; 410) längs einer eine axiale Richtung definierenden Werkzeugachse (W) erstreckt, wobei das Zerspan-Werkzeug (10; 110; 210; 310; 410) in einem ersten axialen Längsendbereich (12) eine Zerspan-Formation (13) aufweist, welche zum Materialabtrag an einem Werkstück ausgebildet ist, wobei das Zerspan-Werkzeug (10; 110; 210; 310; 410) in einem dem ersten entgegengesetzten zweiten axialen Längsendbereich (18) eine Schraubverbindungs-Formation (20) aufweist, welche zur Schraubverbindung mit einem Kopplungsbauteil (24), wie etwa Schaftbauteil, Werkzeugaufnahme (24) oder/und Spannfutter, ausgebildet ist, und wobei das Zerspan-Werkzeug (10; 110; 210; 310; 410) einander bezüglich der Werkzeugachse (W) diametral gegenüberliegende Schlüsselangriffsflächen-Formationen (30, 36) aufweist, welche zum Drehmoment übertragenden Anlageeingriff mit Schlüsselflächen (58, 62; 158, 160, 162, 164) eines Maulschlüssels, insbesondere eines Drehmoment-Maulschlüssels, (52; 152) ausgebildet sind, wobei wenigstens eine der Schlüsselangriffsflächen-Formationen (30, 36) wenigstens eine Axialsicherungsformation (31, 33; 131; 231; 331; 431) aufweist, welche eine Mehrzahl von zur Werkzeugachse (W) nicht-parallelen Anlageflächen (32a-d, 34a-d, 38a-d, 40a; 134a-b; 234a-b; 334a,b,s; 434a,b,s) umfasst, die in axialer Richtung aufeinander folgend angeordnet sind, wobei die Anlageflächen (32a-d, 34a-d, 38a-d, 134a-b; 234a-b; 334a,b,s; 434a,b,s) um eine zur Werkzeugachse (W) orthogonale Anstellachse (AA) relativ zueinander angestellt sind, sodass die wenigstens eine Axialsicherungsformation (31,33; 131; 231; 331; 331; 431) wenigstens eine orthogonal zur Werkzeugachse (W) verlaufende Nut (35, 37; 135; 235; 335; 435) oder/und wenigstens einen orthogonal zur Werkzeugachse (W) verlaufenden Vorsprung umfasst, wobei nur die Flankenbereiche, nicht jedoch Nutscheitel bzw. Vorsprungsscheitel der wenigstens einen Nut (35, 37; 135; 235; 335; 435) oder/und des wenigstens einen Vorsprungs zur berührenden Anlage mit dem Maulschlüssel bzw. dem Einsatzbauteil ausgebildet sind, und
- wobei die Maulschlüssel-Formation (50; 150) des Maulschlüssels bzw. des Einsatzbauteils zur Einleitung von Drehmoment in das Zerspan-Werkzeug (10; 110; 210; 310; 410) ausgebildet ist, wobei das Zerspan-Werkzeug (10; 110; 210; 310; 410) ausgehend von einer Maulöffnung (66) in einer Einführrichtung (I) längs einer Einführachse (E) in die Maulschlüssel-Formation (50; 150) einführbar ist, wobei die Maulschlüssel-Formation (50; 150) zwei sich im Wesentlichen entlang der Einführachse (E) erstreckende, über die Einführachse (E) hinweg gegenüberliegende Backen (53, 54; 153, 154) und eine die Backen (53, 54; 153, 154) verbindende Basis (56; 156) aufweist, wobei jede Backe (53, 54; 153, 154) eine Schlüsselflächen-Formation (58, 62; 158, 160, 162, 164)) zur Übertragung von Drehmoment auf eine Schlüsselangriffsflächen-Formation (30, 36) des Zerspan-Werkzeugs (10; 110; 210; 310; 410) aufweist und wobei sich die Maulschlüssel-Formation (50; 150) in einer Erstreckungsebene (F) erstreckt, welche bei idealem Werkzeugangriff der Maulschlüssel-Formation (50; 150) an dem Zerspan-Werkzeug (10; 110; 210; 310; 410) orthogonal zu dessen Rotationsachse orientiert ist, wobei wenigstens eine der Schlüsselflächen-Formationen (58, 62; 158, 160, 162, 164) eine Axialbarriereformation (59, 61; 159, 161) aufweist, welche zur Anlage an einer Axialsicherungsformation (31, 33; 131; 231; 331; 431) der Schlüsselangriffsflächen-Formation (30, 36) ausgebildet ist, wobei die wenigstens eine Axialbarriereformation (59, 61; 159; 161) eine Mehrzahl von zur Erstreckungsebene (F) nicht-orthogonalen Barriereflächen (58 a-d, 62a-d; 158a, c, 160a-d; 162a-d, 164a, c) umfasst, welche in einer Richtung orthogonal zur Erstreckungsebene (F) aufeinander folgend angeordnet sind, welche um eine zur Erstreckungsebene (F) parallele Abwinkelachse relativ zueinander abgewinkelt sind und welche zur Kontaktierung der Anlageflächen (32a-d, 34a-d, 38a-d, 134a-b; 234a-b; 334a,b,s; 434a,b,s) des rotierbaren Zerspan-Werkzeugs (10; 110; 210; 310; 410) ausgebildet sind, wobei die wenigstens eine Axialsicherungsformation (31, 33; 131; 231; 331; 431) und die wenigstens eine Axialbarriereformation (59, 61; 159, 161) zum Formschlusseingriff aneinander wenigstens abschnittsweise komplementär zueinander ausgebildet sind.

2. Bauteilesatz nach Anspruch 1,
**dadurch gekennzeichnet, dass** die Mehrzahl von Anlageflächen (32a-d, 34a-d, 38a-d, 134a-b; 234a-b) des Zerspan-Werkzeugs (10; 110; 210; 310; 410) eben sind oder/und dass die Mehrzahl von Barriereflächen (58 a-d, 62a-d; 158a, c, 160a-d; 162a-d, 164a, c) der Maulschlüssel-Formation (50; 150) eben sind.

3. Bauteilesatz nach einem der vorhergehenden Ansprüche,
**dadurch gekennzeichnet, dass** jede Schlüsselangriffsflächen-Formation (30, 36) eine Axialsicherungsformation (31, 33; 131; 231; 331; 431) aufweist oder/und dass jede Schlüsselflächen-Formation (58, 62; 158, 160, 162, 164) eine Axialbarriereformation (59, 61; 159, 161) aufweist.

4. Bauteilesatz nach Anspruch 3,
**dadurch gekennzeichnet, dass** die einander gegenüberliegenden Schlüsselangriffsflächen-Formationen (30, 36) bezüglich einer die Werkzeugachse (W) enthaltenden Symmetrieebene (SE) spiegelsymmetrisch oder/und bezüglich der Werkzeugachse (W) rotationssymmetrisch sind oder/und dass die einander gegenüberliegenden Schlüsselflächen-Formationen (58, 62; 158, 160, 162, 164) bezüglich einer zur Erstreckungsebene (F) orthogonalen Symmetrieebene (SP) spiegelsymmetrisch oder/und bezüglich einer zur Erstreckungsebene (F) orthogonalen oder/und parallelen Symmetrieachse rotationssymmetrisch sind.

5. Rotierbares Zerspan-Werkzeug (
310; 410), insbesondere Werkzeugkopf (
310; 410), wie etwa Fräs-, Schleif- oder Bohrkopf, welches sich längs einer eine axiale Richtung definierenden Werkzeugachse (W) erstreckt, wobei das Zerspan-Werkzeug (
310; 410) in einem ersten axialen Längsendbereich (12) eine Zerspan-Formation (13) aufweist, welche zum Materialabtrag an einem Werkstück ausgebildet ist, wobei das Zerspan-Werkzeug (
310; 410) in einem dem ersten entgegengesetzten zweiten axialen Längsendbereich (18) eine Schraubverbindungs-Formation (20) aufweist, welche zur Schraubverbindung mit einem Kopplungsbauteil (24), wie etwa Schaftbauteil, Werkzeugaufnahme (24) oder/und Spannfutter, ausgebildet ist, und wobei das Zerspan-Werkzeug ( 310; 410) einander
bezüglich der Werkzeugachse (W) diametral gegenüberliegende Schlüsselangriffsflächen-Formationen (30, 36) aufweist, welche zum Drehmoment übertragenden Anlageeingriff mit Schlüsselflächen eines Maulschlüssels ausgebildet sind, wobei wenigstens eine der Schlüsselangriffsflächen-Formationen (30, 36) wenigstens eine Axialsicherungsformation ( 331; 431) aufweist, welche wenigstens eine zur Werkzeugachse (W) nicht-parallele Anlagefläche ( 334a,b,s; 434a,b,s) umfasst,
**dadurch gekennzeichnet, dass** die wenigstens eine Anlagefläche (334a, b, s; 434a, b, s) um eine zur Werkzeugachse (W) orthogonale Krümmungsachse gekrümmt ist.

6. Rotierbares Zerspan-Werkzeug ( 310; 410) nach Anspruch 5,
**dadurch gekennzeichnet, dass** der Krümmungsradius der gekrümmten Anlagefläche (334a, b, s) ortsabhängig von der Winkelstellung des Krümmungsradius relativ zur Krümmungsachse variiert.

7. Rotierbares Zerspan-Werkzeug ( 310; 410) nach einem der vor-
hergehenden Ansprüche 5 oder 6,
**dadurch gekennzeichnet, dass** jede Schlüsselangriffsflächen-Formation (30, 36) eine Axialsicherungsformation ( 331; 431) aufweist.

8. Rotierbares Zerspan-Werkzeug ( 310; 410) nach Anspruch 7,
**dadurch gekennzeichnet, dass** die einander gegenüberliegenden Schlüsselangriffsflächen-Formationen (30, 36) bezüglich einer die Werkzeugachse (W) enthaltenden Symmetrieebene (SE) spiegelsymmetrisch oder/und bezüglich der Werkzeugachse (W) rotationssymmetrisch sind.

9. Maulschlüssel-Formation für einen Maulschlüssel zur Einleitung vor Drehmoment in ein rotierbares Objekt, wobei das rotierbare Objekt ausgehend von einer Maulöffnung (66) in einer Einführrichtung (I) längs einer Einführachse (E) in die Maulschlüssel-Formation einführbar ist, wobei die Maulschlüssel-Formation zwei sich im Wesentlichen entlang der Einführachse (E) erstreckende, über die Einführachse (E) hinweg gegenüberliegende Backen und eine die Backen verbindende Basis aufweist, wobei jede Backe eine Schlüsselflächen-Formation aufweist und wobe sich die Maulschlüssel-Formation in einer Erstreckungsebene (F) erstreckt, welche bei idealem Werkzeugangriff der Maulschlüssel-Formation an dem rotierbaren Objekt orthogonal zu dessen Rotationsachse orientiert ist, wobei wenigstens eine der Schlüsselflächen-Formationen eine Axialbarriereformation aufweist, welche wenigstens eine zur Erstreckungsebene (F) nicht-orthogonale Barrierefläche umfasst, **dadurch gekennzeichnet, dass** die wenigstens eine Barrierefläche um eine zur Erstreckungsebene (F) parallele Krümmungsachse gekrümmt ist.

10. Maulschlüssel-Formation nach Anspruch 9,
**dadurch gekennzeichnet, dass** der Krümmungsradius der gekrümmten Barrierefläche ortsabhängig vor der Winkelstellung des Krümmungsradius relativ zur Krümmungsachse variiert.

11. Maulschlüssel-Formation nach einem der Ansprüche 9 oder 10,
**dadurch gekennzeichnet, dass** die wenigstens eine Axialbarriereformation wenigstens eine parallel zur Erstreckungsebene (F) verlaufende Nut oder/und wenigstens einen parallel zur Erstreckungsebene (F) verlaufenden Vorsprung umfasst.

12. Maulschlüssel-Formation nach einem der Ansprüche 9 bis 11.
**dadurch gekennzeichnet, dass** jede Schlüsselflächen-Formation eine Axialbarriereformation aufweist.

13. Maulschlüssel-Formation nach Anspruch 12,
**dadurch gekennzeichnet, dass** die einander gegenüberliegenden Schlüsselflächen-Formationen bezüglich einer zur Erstreckungsebene (F) orthogonalen Symmetrieebene (SP) spiegelsymmetrisch oder/und bezüglich einer zur Erstreckungsebene (F) orthogonalen oder/und parallelen Symmetrieachse rotationssymmetrisch sind.

14. Maulschlüssel mit einer Maulschlüssel-Formation nach einem der vorhergehenden Ansprüche 9 bis 13.

15. Maulschlüssel nach Anspruch 14,
**dadurch gekennzeichnet, dass** der Maulschlüssel beiderseits der Maulschlüssel-Formation Handangriffe aufweist.

## Claims

1. Component set having a rotatable machining tool (10; 110; 210; 310; 410), in particular a tool head (10; 110; 210; 310; 410), for instance a milling head, grinding head or drill head, and having an open-ended wrench or having an application component comprising an open-ended wrench formation (50; 150),
- wherein the machining tool (10; 110; 210; 310; 410) extends along a tool axis (W) defining an axial direction, wherein the machining tool (10; 110; 210; 310; 410) has, in a first axial longitudinal end region (12), a machining formation (13) which is configured to remove material from a workpiece, wherein the machining tool (10; 110; 210; 310; 410) has, in a second axial longitudinal end region (18) at the opposite end from the first, a screw-connection formation (20) which is configured to make a screw connection with a coupling component (24), for instance a shank component, tool receptacle (24) and/or chuck, and wherein the machining tool (10; 110; 210; 310; 410) has wrench engagement face formations (30, 36) that are diametrically opposite one another with regard to the tool axis (W) and are configured to come into abutting engagement, transmitting torque, with flats (58, 62; 158, 160, 162, 164) of an open-ended wrench, in particular of an open-ended torque wrench, (52; 152), wherein at least one of the wrench engagement face formations (30, 36) has at least one axial securing formation (31, 33; 131; 231; 331; 431) which comprises a plurality of abutment faces (32a-d, 34a-d, 38a-d, 40a; 134a-b; 234a-b; 334a,b,s; 434a,b,s) that are not parallel to the tool axis (W) and are arranged one after another in the axial direction, wherein the abutment faces (32a-d, 34a-d, 38a-d, 134a-b; 234a-b; 334a,b,s; 434a,b,s) are set relative to one another about a setting axis (AA) orthogonal to the tool axis (W) such that the at least one axial securing formation (31, 33; 131; 231; 331; 331; 431) comprises at least one groove (35, 37; 135; 235; 335; 435) extending orthogonally to the tool axis (W) and/or at least one protrusion extending orthogonally to the tool axis (W), wherein only the flank regions, but not the groove apex or protrusion apex of the at least one groove (35, 37; 135; 235; 335; 435) and/or of the at least one protrusion, are configured to come into touching abutment against the open-ended wrench or the application component, and
- wherein the open-ended wrench formation (50; 150) of the open-ended wrench or of the application component is configured to introduce torque into the machining tool (10; 110; 210; 310; 410), wherein the machining tool (10; 110; 210; 310; 410) is able to be introduced into the open-ended wrench formation (50; 150), starting from a mouth opening (66), in an introduction direction (I) along an introduction axis (E), wherein the open-ended wrench formation (50; 150) has two jaws (53, 54; 153, 154) that extend substantially along the introduction axis (E) and are opposite one another over the introduction axis (E), and a base (56; 156) connecting the jaws (53, 54; 153, 154), wherein each jaw (53, 54; 153, 154) has a flat formation (58, 62; 158, 160, 162, 164) for transmitting torque to a wrench engagement face formation (30, 36) of the machining tool (10; 110; 210; 310; 410), and wherein the open-ended wrench formation (50; 150) extends in an extension plane (F), which, given ideal tool engagement of the open-ended wrench formation (50; 150) on the machining tool (10; 110; 210; 310; 410), is oriented orthogonally to the axis of rotation thereof, wherein at least one of the flat formations (58, 62; 158, 160, 162, 164) has an axial barrier formation (59, 61; 159, 161) which is configured to come into abutment against an axial securing formation (31, 33; 131; 231; 331; 431) of the wrench engagement face formation (30, 36),
wherein the at least one axial barrier formation (59, 61; 159; 161) comprises a plurality of barrier faces (58a-d, 62a-d; 158a,c, 160a-d; 162a-d, 164a,c) that are not orthogonal to the extension plane (F) and are arranged one after another in a direction orthogonal to the extension plane (F), which are angled relative to one another about an angling axis parallel to the extension plane (F) and which are configured to come into contact with the abutment faces (32a-d, 34a-d, 38a-d, 134a-b; 234a-b; 334a,b,s; 434a,b,s) of the rotatable machining tool (10; 110; 210; 310; 410), wherein the at least one axial securing formation (31, 33; 131; 231; 331; 431) and the at least one axial barrier formation (59, 61; 159, 161), in order to engage with one another in a form-fitting manner, are formed in an at least partially complementary manner to one another.

2. Component set according to Claim 1, **characterized in that** the plurality of abutment faces (32a-d, 34a-d, 38a-d, 134a-b; 234a-b) of the machining tool (10; 110; 210; 310; 410) are planar and/or **in that** the plurality of barrier faces (58a-d, 62a-d; 158a,c, 160a-d; 162a-d, 164a,c) of the open-ended wrench formation (50; 150) are planar.

3. Component set according to either of the preceding claims,
**characterized in that** each wrench engagement face formation (30, 36) has an axial securing formation (31, 33; 131; 231; 331; 431), and/or **in that** each flat formation (58, 62; 158, 160, 162, 164) has an axial barrier formation (59, 61; 159, 161).

4. Component set according to Claim 3,
**characterized in that** the mutually opposite wrench engagement face formations (30, 36) are mirror-symmetric with regard to a plane of symmetry (SE) containing the tool axis (W) and/or are rotationally symmetric with regard to the tool axis (W), and/or in that the mutually opposite flat formations (58, 62; 158, 160, 162, 164) are mirror-symmetric with regard to a plane of symmetry (SP) orthogonal to the extension plane (F) and/or are rotationally symmetric with regard to an axis of symmetry orthogonal and/or parallel to the extension plane (F) .

5. Rotatable machining tool (310; 410), in particular a tool head (310; 410), for instance a milling head, grinding head or drill head, which extends along a tool axis (W) defining an axial direction, wherein the machining tool (310; 410) has, in a first axial longitudinal end region (12), a machining formation (13) which is configured to remove material from a workpiece, wherein the machining tool (310; 410) has, in a second axial longitudinal end region (18) at the opposite end from the first, a screw-connection formation (20) which is configured to make a screw connection with a coupling component (24), for instance a shank component, tool receptacle (24) and/or chuck, and wherein the machining tool (310; 410) has wrench engagement face formations (30, 36) that are diametrically opposite one another with regard to the tool axis (W) and are configured to come into abutting engagement, transmitting torque, with flats of an open-ended wrench, wherein at least one of the wrench engagement face formations (30, 36) has at least one axial securing formation (331; 431) which comprises at least one abutment face (334a,b,s; 434a,b,s) that is not parallel to the tool axis (W), **characterized in that** the at least one abutment face (334a,b,s; 434a,b,s) is curved about an axis of curvature orthogonal to the tool axis (W).

6. Rotatable machining tool (310; 410) according to Claim 5,
**characterized in that** the radius of curvature of the curved abutment face (334a,b,s) varies in a manner locally dependent on the angular position of the radius of curvature relative to the axis of curvature.

7. Rotatable machining tool (310; 410) according to either of the preceding Claims 5 and 6,
**characterized in that** each wrench engagement face formation (30, 36) has an axial securing formation (331; 431).

8. Rotatable machining tool (310; 410) according to Claim 7,
**characterized in that** the mutually opposite wrench engagement face formations (30, 36) are mirror-symmetric with regard to a plane of symmetry (SE) containing the tool axis (W) and/or rotationally symmetric with regard to the tool axis (W).

9. Open-ended wrench formation for an open-ended wrench for introducing torque into a rotatable object, wherein the rotatable object is able to be introduced into the open-ended wrench formation, starting from a mouth opening (66), in an introduction direction (I) along an introduction axis (E), wherein the open-ended wrench formation has two jaws that extend substantially along the introduction axis (E) and are opposite one another over the introduction axis (E), and a base connecting the jaws, wherein each jaw has a flat formation and wherein the open-ended wrench formation extends in an extension plane (F), which, given ideal tool engagement of the open-ended wrench formation on the rotatable object, is oriented orthogonally to the axis of rotation thereof, wherein at least one of the flat formations has an axial barrier formation which comprises at least one barrier face that is not orthogonal to the extension plane (F),
**characterized in that** the at least one barrier face is curved about an axis of curvature parallel to the extension plane (F).

10. Open-ended wrench formation according to Claim 9, **characterized in that** the radius of curvature of the curved barrier face varies in a manner locally dependent on the angular position of the radius of curvature relative to the axis of curvature.

11. Open-ended wrench formation according to either of Claims 9 and 10,
**characterized in that** the at least one axial barrier formation comprises at least one groove extending parallel to the extension plane (F) and/or at least one protrusion extending parallel to the extension plane (F).

12. Open-ended wrench formation according to one of Claims 9 to 11,
**characterized in that** each flat formation has an axial barrier formation.

13. Open-ended wrench formation according to Claim 12, **characterized in that** the mutually opposite flat formations are mirror-symmetric with regard to a plane of symmetry (SP) orthogonal to the extension plane (F) and/or rotationally symmetric with regard to an axis of symmetry orthogonal and/or parallel to the extension plane (F).

14. Open-ended wrench having an open-ended wrench formation according to one of the preceding Claims 9 to 13.

15. Open-ended wrench according to Claim 14, **characterized in that** the open-ended wrench has hand engagement points on both sides of the open-ended wrench formation.

## Revendications

1. Ensemble de composants comportant un outil d'enlèvement de copeaux rotatif (10 ; 110 ; 210 ; 310 ; 410), en particulier une tête d'outil (10 ; 110 ; 210 ; 310 ; 410), telle que par exemple une tête de fraisage, de meulage ou de perçage, et comportant une clé à fourche ou comportant un composant rapporté, comprenant une formation de clé à fourche (50 ; 150),
- l'outil d'enlèvement de copeaux (10 ; 110 ; 210 ; 310 ; 410) s'étendant le long d'un axe d'outil (W) définissant une direction axiale, l'outil d'enlèvement de copeaux (10 ; 110 ; 210 ; 310 ; 410) présentant, dans une première région d'extrémité longitudinale axiale (12), une formation d'enlèvement de copeaux (13), laquelle est réalisée pour l'enlèvement de matière sur une pièce, l'outil d'enlèvement de copeaux (10 ; 110 ; 210 ; 310 ; 410) présentant, dans une deuxième région d'extrémité longitudinale axiale (18) opposée à la première, une formation de connexion par vissage (20), laquelle est réalisée pour la connexion par vissage à un composant d'accouplement (24), tel que par exemple un composant de queue, un logement d'outil (24) et/ou un mandrin de serrage, et l'outil d'enlèvement de copeaux (10 ; 110 ; 210 ; 310 ; 410) présentant des formations de surfaces d'engagement de clé (30, 36) diamétralement opposées l'une à l'autre par rapport à l'axe d'outil (W), lesquelles sont réalisées pour l'engagement d'appui avec transmission de couple avec des surfaces de clé (58, 62 ; 158, 160, 162, 164) d'une clé à fourche, en particulier d'une clé à fourche dynamométrique (52 ; 152), au moins l'une des formations de surfaces d'engagement de clé (30, 36) présentant au moins une formation de fixation axiale (31, 33 ; 131 ; 231 ; 331 ; 431), laquelle comprend une pluralité de surfaces d'appui (32a-d, 34a-d, 38a-d, 40a ; 134a-b ; 234a-b ; 334a,b,s ; 434a,b,s) non parallèles à l'axe d'outil (W), qui sont disposées les unes à la suite des autres dans la direction axiale, les surfaces d'appui (32a-d, 34a-d, 38a-d, 134a-b ; 234a-b ; 334a,b,s ; 434a,b,s) étant réglées les unes par rapport aux autres atour d'un axe de réglage (AA) orthogonal à l'axe d'outil (W), de sorte que l'au moins une formation de fixation axiale (31, 33 ; 131 ; 231 ; 331 ; 331 ; 431) comprenne au moins une rainure (35, 37 ; 135 ; 235 ; 335 ; 435) s'étendant orthogonalement à l'axe d'outil (W) et/ou au moins une saillie s'étendant orthogonalement à l'axe d'outil (W), seulement les régions formant flancs, mais pas le sommet de rainure ou le sommet de saillie de l'au moins une rainure (35, 37 ; 135 ; 235 ; 335 ; 435) et/ou de l'au moins une saillie, étant réalisées pour l'appui avec contact avec la clé à fourche ou le composant rapporté, et
- la formation de clé à fourche (50 ; 150) de la clé à fourche ou du composant rapporté étant réalisée pour l'introduction d'un couple dans l'outil d'enlèvement de copeaux (10 ; 110 ; 210 ; 310 ; 410), l'outil d'enlèvement de copeaux (10 ; 110 ; 210 ; 310 ; 410) pouvant être inséré dans la formation de clé à fourche (50 ; 150) à partir d'une ouverture de clé (66) dans un sens d'insertion (I) le long d'un axe d'insertion (E), la formation de clé à fourche (50 ; 150) présentant deux mâchoires (53, 54 ; 153, 154) s'étendant sensiblement le long de l'axe d'insertion (E) et opposées sur l'axe d'insertion (E) et une base (56 ; 156) connectant les mâchoires (53, 54 ; 153, 154), chaque mâchoire (53, 54 ; 153, 154) présentant une formation de surfaces de clé (58, 62 ; 158, 160, 162, 164) servant à la transmission d'un couple à une formation de surfaces d'engagement de clé (30, 36) de l'outil d'enlèvement de copeaux (10 ; 110 ; 210 ; 310 ; 410) et la formation de clé à fourche (50 ; 150) s'étendant dans un plan d'étendue (F), lequel, en cas d'engagement d'outil idéal de la formation de clé à fourche (50 ; 150) avec l'outil d'enlèvement de copeaux (10 ; 110 ; 210 ; 310 ; 410), est orienté orthogonalement à son axe de rotation,
au moins l'une des formations de surfaces de clé (58, 62 ; 158, 160, 162, 164) présentant une formation de barrière axiale (59, 61 ; 159, 161), laquelle est réalisée pour l'appui contre une formation de fixation axiale (31, 33 ; 131 ; 231 ; 331 ; 431) de la formation de surfaces d'engagement de clé (30, 36),
l'au moins une formation de barrière axiale (59, 61 ; 159 ; 161) comprenant une pluralité de surfaces de barrière (58a-d, 62a-d ; 158a, c, 160a-d ; 162a-d, 164a, c) non orthogonales au plan d'étendue (F), lesquelles sont disposées les unes à la suite des autres dans une direction orthogonale au plan d'étendue (F), lesquelles sont inclinées les unes par rapport aux autres autour d'un axe d'inclinaison parallèle au plan d'étendue (F) et lesquelles sont réalisées pour venir en contact avec les surfaces d'appui (32a-d, 34a-d, 38a-d, 134a-b ; 234a-b ; 334a,b,s ; 434a,b,s) de l'outil d'enlèvement de copeaux rotatif (10 ; 110 ; 210 ; 310 ; 410), l'au moins une formation de fixation axiale (31, 33 ; 131 ; 231 ; 331 ; 431) et l'au moins une formation de barrière axiale (59, 61 ; 159, 161) étant réalisées de manière complémentaire les unes aux autres au moins dans certaines parties pour l'engagement par complémentarité de forme les unes avec les autres.

2. Ensemble de composants selon la revendication 1, **caractérisé en ce que** la pluralité de surfaces d'appui (32a-d, 34a-d, 38a-d, 134a-b ; 234a-b) de l'outil d'enlèvement de copeaux (10 ; 110 ; 210 ; 310 ; 410) sont planes et/ou **en ce que** la pluralité de surfaces de barrière (58 a-d, 62a-d ; 158a, c, 160a-d ; 162a-d, 164a, c) de la formation de clé à fourche (50 ; 150) sont planes.

3. Ensemble de composants selon l'une des revendications précédentes,
**caractérisé en ce que** chaque formation de surfaces d'engagement de clé (30, 36) présente une formation de fixation axiale (31, 33 ; 131 ; 231 ; 331 ; 431) et/ou en ce que chaque formation de surfaces de clé (58, 62 ; 158, 160, 162, 164) comprend une formation de barrière axiale (59, 61 ; 159, 161).

4. Ensemble de composants selon la revendication 3, **caractérisé en ce que** les formations de surfaces d'engagement de clé (30, 36) opposées l'une à l'autre présentent une symétrie miroir par rapport à un plan de symétrie (SE) contenant l'axe d'outil (W) et/ou présentent une symétrie de révolution par rapport à l'axe d'outil (W) et/ou **en ce que** les formations de surfaces de clé (58, 62 ; 158, 160, 162, 164) opposées l'une à l'autre présentent une symétrie miroir par rapport à un plan de symétrie (SP) orthogonal au plan d'étendue (F) et/ou présentent une symétrie de révolution par rapport à un axe de symétrie orthogonal et/ou parallèle au plan d'étendue (F).

5. Outil d'enlèvement de copeaux rotatif (310 ; 410), en particulier tête d'outil (310 ; 410), telle que par exemple une tête de fraisage, de meulage ou de perçage, laquelle s'étend le long d'un axe d'outil (W) définissant une direction axiale, l'outil d'enlèvement de copeaux (310 ; 410) présentant, dans une première région d'extrémité longitudinale axiale (12), une formation d'enlèvement de copeaux (13), laquelle est réalisée pour l'enlèvement de matière sur une pièce, l'outil d'enlèvement de copeaux (310 ; 410) présentant, dans une deuxième région d'extrémité longitudinale axiale (18) opposée à la première, une formation de connexion par vissage (20), laquelle est réalisée pour la connexion par vissage à un composant d'accouplement (24), tel que par exemple un composant de queue, un logement d'outil (24) et/ou un mandrin de serrage, et l'outil d'enlèvement de copeaux (310 ; 410) présentant des formations de surfaces d'engagement de clé (30, 36) diamétralement opposées l'une à l'autre par rapport à l'axe d'outil (W), lesquelles sont réalisées pour l'engagement d'appui avec transmission de couple avec des surfaces de clé d'une clé à fourche, au moins l'une des formations de surfaces d'engagement de clé (30, 36) présentant au moins une formation de fixation axiale (331 ; 431), laquelle comprend au moins une surface d'appui (334a,b,s ; 434a,b,s) non parallèle à l'axe d'outil (W), **caractérisé en ce que** l'au moins une surface d'appui (334a,b,s ; 434a,b,s) est incurvée atour d'un axe de courbure orthogonal à l'axe d'outil (W).

6. Outil d'enlèvement de copeaux rotatif (310 ; 410) selon la revendication 5,
**caractérisé en ce que** le rayon de courbure de la surface d'appui incurvée (334a, b, s) varie en fonction de la position angulaire du rayon de courbure par rapport à l'axe de courbure.

7. Outil d'enlèvement de copeaux rotatif (310 ; 410) selon l'une des revendications précédentes 5 ou 6, **caractérisé en ce que** chaque formation de surfaces d'engagement de clé (30, 36) présente une formation de fixation axiale (331 ; 431).

8. Outil d'enlèvement de copeaux rotatif (310 ; 410) selon la revendication 7,
**caractérisé en ce que** les formations de surfaces d'engagement de clé (30, 36) opposées l'une à l'autre présentent une symétrie miroir par rapport à un plan de symétrie (SE) contenant l'axe d'outil (W) et/ou présentent une symétrie de révolution par rapport à l'axe d'outil (W).

9. Formation de clé à fourche pour une clé à fourche servant à l'introduction d'un couple dans un objet rotatif, l'objet rotatif pouvant être inséré dans la formation de clé à fourche à partir d'une ouverture de clé (66) dans un sens d'insertion (I) le long d'un axe d'insertion (E), la formation de clé à fourche présentant deux mâchoires s'étendant sensiblement le long de l'axe d'insertion (E) et opposées sur l'axe d'insertion (E) et une base connectant les mâchoires, chaque mâchoire présentant une formation de surfaces de clé et la formation de clé à fourche s'étendant dans un plan d'étendue (F), lequel, en cas d'engagement d'outil idéal de la formation de clé à fourche avec l'objet rotatif, est orienté orthogonalement à son axe de rotation, au moins l'une des formations de surfaces de clé présentant une formation de barrière axiale, laquelle comprend au moins une surface de barrière non orthogonale au plan d'étendue (F),
**caractérisée en ce que** l'au moins une surface de barrière est incurvée autour d'un axe de courbure parallèle au plan d'étendue (F).

10. Formation de clé à fourche selon la revendication 9, **caractérisée en ce que** le rayon de courbure de la surface de barrière incurvée varie en fonction de la position angulaire du rayon de courbure par rapport à l'axe de courbure.

11. Formation de clé à fourche selon l'une des revendications 9 ou 10,
**caractérisée en ce que** l'au moins une formation de barrière axiale comprend au moins une rainure s'étendant parallèlement au plan d'étendue (F) et/ou au moins une saillie s'étendant parallèlement au plan d'étendue (F).

12. Formation de clé à fourche selon l'une des revendications 9 à 11,
**caractérisée en ce que** chaque formation de surfaces de clé présente une formation de barrière axiale.

13. Formation de clé à fourche selon la revendication 12,
**caractérisée en ce que** les formations de surfaces de clé opposées l'une à l'autre présentent une symétrie miroir par rapport à un plan de symétrie (SP) orthogonal au plan d'étendue (F) et/ou présentent une symétrie de révolution par rapport à un axe de symétrie orthogonal et/ou parallèle au plan d'étendue (F).

14. Clé à fourche comportant une formation de clé à fourche selon l'une des revendications précédentes 9 à 13.

15. Clé à fourche selon la revendication 14, **caractérisée en ce que** la clé à fourche présente des éléments d'engagement manuels de part et d'autre de la formation de clé à fourche.
